(19) Europäisches Patentamt
European Patent Office
Office européen des brevets

(11) Veröffentlichungsnummer: **0 095 635**
**B1**

(12) # EUROPÄISCHE PATENTSCHRIFT

(45) Veröffentlichungstag der Patentschrift: **26.02.86**

(51) Int. Cl.⁴: **C 08 L 71/02**, C 08 G 18/66, C 08 L 75/08

(21) Anmeldenummer: **83104784.0**

(22) Anmeldetag: **16.05.83**

(54) **Einphasig lagerstabile, salzhaltige Polyolkompositionen mit hohem Ethylenglykol- oder Butandiol-Anteil und ihre Verwendung zur Herstellung von Polyurethanen.**

(30) Priorität: **26.05.82 DE 3219822**

(43) Veröffentlichungstag der Anmeldung: **07.12.83 Patentblatt 83/49**

(45) Bekanntmachung des Hinweises auf die Patenterteilung: **26.02.86 Patentblatt 86/9**

(84) Benannte Vertragsstaaten: **BE DE FR GB IT NL**

(56) Entgegenhaltungen:
**DE - A - 1 770 703**
**FR - A - 2 162 587**
**US - A - 3 298 980**
**US - A - 3 945 939**

(73) Patentinhaber: **BAYER AG, Konzernverwaltung RP Patentabteilung, D-5090 Leverkusen 1 Bayerwerk (DE)**

(72) Erfinder: **Rasshofer, Werner, Dr., Wolfskaul 10, D-5000 Koeln 80 (DE)**
Erfinder: **Reichmann, Wolfgang, Dr., Koelner Strasse 48, D-4010 Hilden (DE)**
Erfinder: **Richartz, Adolf, Dr., Georgstrasse 41, D-5000 Koeln 90 (DE)**
Erfinder: **Dietrich, Manfred, Dr., Dresdener Strasse 16, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 095 635 B1

LIBER, STOCKHOLM 1986

**Beschreibung**

Die Erfindung betrifft homogen lagerstabile, Salze enthaltende Polyolgemische mit hoher Misch-OH-Zahl und hohem Ethylenglykol- und/oder Butandiol-1,4-Gehalt aus höhermolekularen Polyoxyalkylenpolyolen der OH-Zahl 20 bis 210 mit mindestens 5 Gew.-%, überwiegend oder aus-schließlich endständigen Oxyethylenoxidblöcken, in Abmischungen mit Umsetzungsprodukten von Ethylenglykol und/oder Butandiol-1,4 und 0,05 bis 0,5 Mol Alkyloxiranen. Weiterer Erfindungsgegenstand ist die Verwendung dieser Polyolgemische zur Herstellung von Polyurethan-Kunststoffen.

Es ist aus der DE-B-1 770 703 bekannt, zur Herstellung von Polyurethanen Gemische von miteinander unverträglichen Polyolen einzusetzen. Auf diese Weise sind Endprodukte mit verbessertem Eigenscha;tsniveau wie beispielsweise guter Wärmebeständigkeit und hoher Schlagzähigkeit zugänglich.

Dieses Prinzip der Polyurethanhers;ellung unter Verwendung von unverträglichen Polyolgemischen eignet sich gemäß der DE-A-2 309 861 auch zur Herstellung von Schaumstoff-Formkörpern mit kompakter Oberfläche.

Die Verwendung einer Mischung unverträglicher Polyole hat jedoch eine Reihe lager- und verarbeitungstechnischer Nachteile. Bereits eine kurzfristige Lagerhaltung, d.h. einige Stunden bis 3 Tage, derartiger gut durchgemischter Polyolsysteme bedingt die Auftrennung des Gemisches in 2 Phasen, so daß vor jedem Abfüllen die Polyolmischungen wieder sehr intensiv durchmischt werden bzw. ständig gemischt oder im Kreislauf gefahren werden müssen, um zu gewährleisten, daß das Mischungsverhältnis der Komponenten erhalten bleibt.

Es sind verschiedene Wege bekannt geworden, solche Mischungen phasenstabil einzustellen.

Das Absetzen der Phasen kann z.B. gemäß der Lehre der US-A- 3 945 939 durch den Zusatz von kolloidaler Kieselsäure oder eines mit einer Oniumverbindung modifizierten Tons erfolgen. Ähnlich lehrt die DE-A-2 341 294 die Mitverwendung von inerten, oberflächenaktiven Materialien, die eine spez. Oberfläche von 10-800 $m^2/g$ aufweisen, wie Kieselsäureagglomerat und/oder ein Chrysotil-Asbest und/ oder ein in seinem mineralischen Aufbau Chrysotil-Asbest entsprechendes anorganisches Material.

Eine andere Möglichkeit, mehrere miteinander unverträgliche Polyole zu homogenisieren, besteht in der Mitverwendung von flüssigen oder löslichen Lösungsvermittlern.

So werden gemäß US-A- 4 141 852 Gemische aus monomeren Polyolen mit einer Molmasse > 500 und Polyetherpolyolen mit einer Molmasse von 1800-7000 dadurch vor der Separation bewahrt, daß sogenannte Pfropfpolypropylenetherglykole der Molmasse 1500-3500 mitverwendet werden. Eine stabile Emulsion aus einem hochmolekularen Polyol und Ethylenglykol oder Butandiol-1,4 wird gemäß US-A-4 273 884 dadurch hergestellt, daß ein Ethylenoxid/Propylenoxid-Copolymer (Molmasse > 12000) mitverwendet wird.

In der DE-B-2 759 398 werden Mischungen aus Poly(oxypropylen/oxyethylen)-polyolen (OH-Zahl 20-60) mit bestimmten Oxyethylengehalten und Ethylenglykol oder Butandiol beschrieben.

In der US-Anmeldung US-B 471 405 werden Gemische aus hochmolekularen Polyoxyalkylenpolyolen, die OH-Äquivalentgewichte von 650-3000 aufweisen, und z.B. Ethylenglykol dadurch vor der Entmischung bewahrt, daß Verbindungen wie 1,2-Butylenglykol, Di-(1,2-butylengly-kol), Di-(1,2-propylenglykol) und Tri-(1,2-propylengly-kol) mitverwendet werden.

Weiterhin ist es dem Fachmann bekannt, daß zweiphasige Gemische aus miteinander unverträglichen Polyolen auch durch Zugabe geringer Menge an Emulgatoren wie z.B. langkettiger Benzolalkylsulfonate einphasig eingestellt werden können. Alle diese Lehren gemäß des Standes der Technik können nicht voll befriedigen. So kann die Verwendung von Feststoffen als Emulsionsstabilisatoren die Abrasion von Mischeinrichtungen bewirken, auch läßt die Stabilisierungswirkung im allgemeinen nach einigen Tagen schon stark nach. Außerdem werden neuerdings gegen asbestöse Materialien physiologische Bedenken ins Feld geführt. Zu berücksichtigen ist bei der Verwendung solcher oberflächenaktiven Substanzen deren katalytische Eigenaktivität, insbesondere bei Beladung mit Onium-Verbindungen.

Die Mitverwendung von sog. "Pfropfpolyolen', wie sie die US-A- 4 141 852 vorschlägt, hat den Nachteil, daß solche "Pfropfpolyole" gegenüber den Polyolen teuer sind und so die Wirtschaftlichkeit des Verfahrens beeinträchtigen.

Die Lehre der US-A- 4 273 884 vermag ebenfalls nicht die Wünsche nach einem einphasig lagerstabilen Polyolgemisch zu befriedigen. Die herstellbaren Emulsionen zeigen nämlich schon, zumindest teilweise, innerhalb der ersten 6-8 Wochen eine Separation der Phasen. Die obige Patentschrift beschreibt im übrigen, daß "ziemlich stabile' Emulsionen erhalten werden.

Die Mitverwendung von Di- und Tripropylenglykol vermag zwar, wie in der US-Anmeldung B 471 405 gelehrt wird, solche einphasig stabilen Polyolmischungen zu erzeugen, doch ist es jedem Fachmann bekannt, daß die Mitverwendung dieser Verbindungen zu einem scharfen Abfall der mechanischen Werte daraus hergestellter Polyurethankunststoffteile führt, insbesondere leidet die Wärmeformbeständigkeit.

Die Verwendung üblicher Emulgatoren zur Einphaseneinstellung leidet an einer Reihe von Nachteilen:

Die Emulgatoren können mit der Zeit aus der Polyolmischung kristallin ausfallen oder sich z.B. an der Oberfläche anreichern, sie können die katalytische Systembalance in unkontrollierbarer Weise verändern, sie können aus dem fertigen Polyurethanformteil ausschwitzen und damit dessen Gebrauchseigenschaften drastisch mindern.

Es besteht also weiterhin ein dringendes technisches Interesse an für einen genügend langen Zeitraum (mindestens ca. 6 Monate) völlig lagerstabilen Polyolformulierungen, die optisch klar sind, keine weiteren festen oder flüssigen Zusätze, die ausfallen oder sich anderweitig separieren oder verändern oder in Reaktion treten

können, enthalten, eine hohe Misch-OH-Zahl haben und einen hohen Anteil an Ethylenglykol und/oder Butan-1,4 aufweisen.

Überraschenderweise wurde gefunden, daß Gemische aus nachstehend näher bezeichneten Polyoxyalkylenpolyolen und nachstehend näher bezeichneten Hydroxyverbindungen/ Alkoxiran-Umsetzungsprodukten dann in besonders weiten Bereichen einphasig lagerstabil und optisch völlig klar sind und einen hohen Anteil an Ethylenglykol oder Butan-diol-1,4 aufweisen, ohne daß gleichzeitig der Gehalt an (unerwünschten) Alkoxylierungsprodukten des Ethylenglykols oder Butandiol-1,4 zu hoch wird, wenn sie Ammonium- und/oder Metallsalze von z.B. $C_1$-$C_8$-Mono- oder Polycarbonsäuren enthalten.

Gegenstand der vorliegenden Erfindung ist ein einphasig lagerstabiles, emulgatorfreies Polyolgemisch mit hoher Misch-OH-Zahl und hohem Gehalt an freien Polyolen der OH-Zahlen zwischen 1000 und 1720, vorzugsweise hohem Gehalt an freiem Ethylenglykol und/oder Butandiol-1,4, aus

A) einem höhermolekularen Polyoxyalkvlenpolyol und

B) einem Gemisch niedermolekularer Diole, gegebenenfalls

C) weiteren, an sich bekannten Verbindungen mit gegenüber Isocyanaten reaktionsfähigen Wasserstoffatomen

D) lösungsvermittelnden Zusätzen und gegebenenfalls

E) weiteren Hilfs- und Zusatzstoffen der Polyurethanherstellung,

dadurch gekennzeichnet, daß man

als Komponente A) ein Polyoxyalkylenpolyol der OH-Zahl 20-210, das mindestens 5 Gew.-% und weniger als 80 Gew.-%, vorzugsweise 10 bis 50 Gew.-%, besonders bevorzugt 12,5 bis 27,5 Gew.-% überwiegend oder ausschließlich endständige Oxyethylenblöcke, besitzt,

als Komponente B) ein niedermolekulares Diolgemisch mit OH-Zahlen zwischen 1000 bis 1720, in Form der Umsetzungsprodukte von

1. mindestens 2 Hydroxylgruppen aufweisenden Verbindungen der OH-Zahl 1244 bis 1828, bevorzugt Ethylenglykol und/oder Butandiol-1,4, besonders bevorzugt Ethylenglykol, und/oder Butandiol-1,4, besonders bevorzugt Ethylenglykol, und

2. 0,05 bis 0,50 Mol, bevorzugt 0,1 bis 0,5 Mol, besonders bevorzugt 0,2 bis 0,4 Mol, Alkyloxiranen

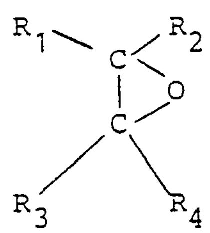

$R_1 = CH_3, CH_2.C1, C_2H_5$
$R_2 = H, CH_3$
$R_3, R_4 = H, CH_3, C_2H_5,$
besonders bevorzugt Propylenoxid,

gegebenenfalls als Komponente C) weitere zwei- oder mehrwertige Verbindungen mit gegenüber NCO-Gruppen reaktionsfähigen Wasserstoffatomen und einer Molmasse von 32 bis 399,

als lösungsvermittelnde Zusätze D) ein oder mehrere Salze mit Kationen der 1., 2. und 3. Hauptgruppe des Periodensystems der Elemente oder Ammonium- oder Mono- bis Tetraalkylammoniumionen und als Anionen Reste enthalten, wie sie durch Entfernung mindestens eines Protons aus einer Säure mit einem $K_S$-Wert von mindestens $10^{-7}$ entstehen, vorzugsweise Anionen von Mono- oder Polycarbonsäuren, der Kohlensäure, der Halogen- und Pseudohalogensäuren, sowie der Chalcogensäuren, wobei im Polyolgemisch auf 100 Teile A) 1 bis 100 Teile B), vorzugsweise 5-50 Teile, besonders bevorzug; 10 bis 40 Teile B), gegebenenfalls 0 bis 20 Teile C) und erfindungswesentlich 0,01 bis 5 Teile D), vorzugsweise 0,1 - 2,5 Teile D), eingesetzt werden.

Bevorzugt sind Polyolgemische, in denen die Komponente B) aus

a) mindestens 40 Gew.-% der mindestens 2 Hydroxylgruppen aufweisenden Verbindungen B)/, vorzugsweise mindestens 40 Gew.-% Ethylenglykol oder Butandiol-1,4,

b) 20 bis 50 Gew.-% Monoalkoxylierungsprodukt von B)/1,

c) 0 bis 20 Gew.-% Dialkoxylierungsprodukt von B)/I,

d) 0 bis 10 Gew.-% Trialkoxylierungsprodukt von B)/1 und

e) 0 bis 2 Gew.-% noch höher alkoxylierten Produkten von B)/1, wobei die Summe von a) bis e) = 100 Gew.-% ist,

besteht.

Bevorzugt werden ferner solche Polyolgemische verwendet, welche als Komponente A) Polyoxyalkylenpolyole mit überwiegend oder ausschließlich endständigen Oxyethylenblöcken in Mengen von 10 bis 50 Gew.-%, besonders bevorzugt von 12,5 bis 27,5 Gew.-%, aufweisen. Die Polyoxyalkylenpolyole sind insbesondere 2- bis 4-wertige Polyole der gekennzeichneten Art mit einer OH-Zahl von 20 bis 60.

Gegenstand der Erfindung ist ferner die Verwendung dieser einphasig lagerstabilen, emulgatorfreien, salzhaltigen Polyolgemische als Reaktionskomponente bei der Herstellung von Polyurethankunststoffen.

Die einphasig lagerstäbilen, emulgatorfreien, salzhaltigen Polyolgemische der Erfindung zeigen weiterhin folgende Vorteile, wobei gleichzeitig oben aufgeführte Nachteile des Standes der Technik vermieden werden:

Bei der Herstellung von Polyurethan-Integralschaumstoffen wird eine qualitative Verbesserung beobachtet, d.h. die nicht-zellige Haut ist dicker, frei von sog. "pin holes' und anderen Oberflächenstörungen und die PU-Integralschaumteile weisen insgesamt weniger "Abbläser', d.h. unregelmäßige Krater, auf. Bei der Herstellung von Polyurethan-Integralschaumstoffen werden, insbesondere bei harten Ausführungen, ein oder mehrere sogenannte Zellstabilisatoren z.B. auf Basis von Polysiloxan-Polyalkylenoxid-Copolymeren, eingesetzt. Bei der Verwendung der erfindungsgemäßen Polyolgemische kann in vielen Fällen ganz oder teilweise auf die Verwendung solcher Stabilisatoren verzichtet werden.

Bei geeigneter Vorgehensweise können auch sog. warmverformbare PU-Integralschaumstoffe hergestellt werden. Die Polyurethane weisen dabei insgesamt eine verbesserte Wärmestandfestigkeit auf.

In vielen Fällen wird den Polyolgemischen durch Zusatz der carbonsauren Salze eine katalytische Eigenaktivität, die oftmals für normale Anwendungszwecke genügt, verliehen.

Überraschenderweise hat sich gezeigt, daß nur ganz bestimmte Polyetherpolyole zusammen mit den erfindungs-gemäß bevorzugt zu verwendenden Ethylenglykol- oder Butandiol-l,4/Alkyloxiran-Addukten eine besonders hohe Misch-OH-Zahl mit relativ hohem Ethylenglykol- bzw. Butandiol-1,4-Gehalt und relativ niedrigem Gehalt an Alkoxylierungsprodukten des Ethylenglykols bzw. Butandiols im Polyolgemisch bei gleichzeitiger Einphasigkeit des Polyolgemischs ergeben.

Die als Komponente A) einzusetzenden Polyetherpolyole sind lineare oder verzweigte, di-, tri-, tetra- oder höherfunktionelle Polyoxyalkylenpolyole, ("Polyalkylenoxidpolyole') die eine OH-Zahl von 20 bis 210, vorzugsweise 20 bis 120 und besonders bevorzugt 20 bis 60 aufweisen, die mindestens 5 Gew.-% und weniger als 80 Gew.-%, überwiegend oder ausschließlich an den Kettenenden befindliche Polyoxyethylenblöcke besitzen.

Besonders bevorzugt sind solche Polyoxyalkylenpolyole die überwiegend oder ausschließlich endständige Oxyethylenblöcke von 10 bis 50 Gew.-%, bezogen auf die Summe aller im Polyoxyalkylenpolyol vorhandenen Oxyalkyleneinheiten, ausmachen. Die günstigsten Werte ergeben sich bei solchen Polyoxyalkylenpolyolen, welche 12,5 bis 27,5 Gew.-% überwiegend endständige Oxyethylenblöcke besitzen. Die Polyoxyalkylenpolyole sind dabei bevorzugt di-, trioder tetrafunktionell, besonders bevorzugt sind di- bis trifunktionelle Polyoxyalkylenpolyole der genannten OH-Zahlen. Die technisch wichtigsten Polyoxyalkylenpolyole sind dabei die Polyoxypropylenpolyole mit 10 bis 50 Gew.-%, bevorzugt 12,5 bis 27,5 Gew.-% an überwiegend oder ausschließlich endständigen Oxyethylenblöcken und einer Funktionalität von 2 bis 3.

Die höhermolekularen Polyalkylenoxidpolyole mit überwiegend oder ausschließlich endständigen Oxyethylensequenzen (d.h. auch endständig überwiegend primären OH-Gruppen) werden nach den üblichen Verfahren hergestellt. So werden diese Polyole durch Polymerisation von Tetrahydrofuran oder Alkylenoxiden wie Ethylenoxid, Propylenoxid, 1,2- oder 2,3-Bu-tylenoxid, Styroloxid und/oder Epichlorhydrin durch Anlagerung an Startkomponenten mit reaktionsfähigen Wasserstoffatomen wie Wasser, Polyole, Ammoniak oder Amine bzw. Polyamine oder Aminoalkohole, z.B. Ethylenglykol, Propandiol-1,2 oder -1,3, Dipropylenglykol, Trimethylolpropan, Glycerin, Pentaerythrit, Sorbit, Sucrose, 4,4'-Dihydroxy-di-phenylpropan, Anilin, Ethanolamin oder Ethylendiamin, gegebenenfalls in Gegenwart von sauren oder vorzugsweise basischen Katalysatoren hergestellt. Die Polymerisation erfolgt dabei im Gemisch mit Ethylenoxid, vorzugsweise aber in stufenweiser Reaktion mit der Anlagerung von Ethylenoxid in der Endstufe.

Besonders bevorzugt sind Polyoxypropylenpolyetherpolyole mit endständigen oder überwiegend endständigen Oxyethylensequenzen und primären Hydroxylgruppen. Die Oxyethylensequenzen bzw. -blöcke können auch zum Teil im Inneren der Polyether vorliegen, müssen aber zum überwiegenden Teil endständig angeordnet sein.

Herstellung und Eigenschaften solcher Polyether sind in Ullmanns Enzyklopädie der Technischen Chemie, Verlag Chemie, Weinheim, 4. Auflage, Band 19 (1981) im Kapitel Polyalkylenglykole (S. 31-38) und im Kapitel Polyurethane (S. 301-341, bes. S. 304-308) beschrieben und werden auch im Kunststoff-Handbuch, Band VII, Polyurethane, Carl Hanser Verlag, München, 1966 auf S. 61-75 abgehandelt.

Die Polyolkomponente B) stellen für sich Gemische dar, wie sie durch an sich bekannte Umsetzung von Polyolen B)/1 mit Alkyloxiranen B)/2 entstehen. Erfindungsgemäß werden dabei 0,1 - 0,5 mol, bevorzugt 0,2 - 0,4 mol Alkyloxiran, vorzugsweise Propylenoxid, auf 1 mol Ethylenglykol oder Butandiol-1,4 eingesetzt.

Komponente (B) soll dabei eine Zusammensetzung in den Grenzen von

a) mindestens 40 Gew.-% nicht-alkoxyliertes B)/1, vorzugsweise Ethylenglykol und/oder Butandiol-1,4 (vorzugsweise mindestens 54 Gew.-%),

b) 20-50 Gew.-% monopropoxyliertes (vorzugsweise 20-40 Gew.-%),

c) 0-20 Gew.-% zweifach propoxyliertes (vorzugsweise 0-5 Gew.-%),

d) 0-10 Gew.-% dreifach propoxyliertes (vorzugsweise 0-1 Gew.-%),

e) 0-2 Gew.-% noch höher alkoxyliertes Produkt von B)/l, vorzugsweise von Ethylenglykol oder Butandiol, wobei die Summe a) + b) + c) + d) + e) = 100 Gew.-% ist, aufweisen.

Die Alkoxylierung der Hydroxylverbindungen B)/l kann basisch (z.B. mit Alkalihydroxiden) oder sauer (z.B. mit $BF_3$-Etherat) katalysiert werden, vorzugsweise wird sie mit KOH katalysiert. Der Katalysator wird nach Beendigung der Reaktion neutralisiert oder absorbiert und gegebenenfalls aus dem Alkoxylierungsprodukt nach an sich bekannten Methoden entfernt.

Als Polyole B)/l können alle, mindestens 2 Hydroxylgruppen aufweisenden Verbindungen der OH-Zahl 1244 bis

1828 verwendet werden.

Bevorzugt und im Sinne dieser Erfindung zweckmäßig werden solche Di- oder Triole verwendet, die ohne diese er-findungsgemäße Modifikation mit Alkyloxiranen in handelsüblichen Polyethern keine oder für praktische Zwecke ungenügende Mischbarkeit zeigen oder deren Mischbarkeit verbessert werden soll.

Solche bevorzugten Di- oder Triole B)/l sind: Ethylenglykol, 1,2-Propandiol, 1,3-Propandiol, 3-Chlor-1,2-propan-diol, 1,2-Butandiol, 1,3-Butandiol, 1,4-Butandiol, 2-Bu-ten-1,4-diol, Glycerin, Trimethylolethan, 1,2,6-Hexandiol, Trimethylolpropan, Pentaerythrit, Butantriol-1,2,4 oder ihre Mono- und Oligo-Ethoxylierungsprodukte.

Besonders wichtig und bevorzugt sind Ethylenglykol und Butandiol-1,4.

Geeignete Alkyloxirane B)/2 sind z.B. Methyloxiran (Propylenoxid), Chlormethyloxiran, Ethyloxiran, 2,2-Dimethyloxiran, bevorzugt sind durch basische Katalyse addierbare Alkyloxirane, besonders bevorzugt ist Methyloxiran.

B)/2 wird mit B)/l so umgesetzt, daß auf 1 Äquivalent an aus dem Vernetzer stammenden OH-Gruppen 0,05 bis 0,50, bevorzugt 0,1 bis 0,5, besonders bevorzugt 0,2 bis 0,4 Äquivalente Oxirangruppen treffen.

Bei der Umsetzung von B)/1 mit B)2 entstehen Gemische aus unverändertem B)/l mit verschiedenen Oxalkylierungsprodukten. Dabei werden, durch das Molverhältnis von 8)/1 und B)/2 bedingt, Gemische erhalten, die aus

a) mindestens 40, vorzugsweise 40-80 Gew.-% Vernetzer der OH-Zahl 1244 bis 1826 (mg KOH/g),
b) 20 bis 50 Gew.-% Monoalkoxylierungsprodukt,
c) 0 bis 20 Gew.-% Dialkoxylierungsprodukt,
d) 0 bis 10 Gew.-% Trialkoxylierungsprodukt,
e) 0 bis 2 Gew.-% höher alkoxyliertem Vernetzer,

wobei

die Summe a) + b) + c) + d) + e) = 100 Gew.-% ist, bestehen.

Bevorzugt wird Propylenoxid mit den Diolen Ethylenglykol oder Butandiol-1,4 umgesetzt, es können aber auch Diol-Gemische im oben beschriebenen Hydroxyl-/Oxiran-Gruppenverhältnis mit Alkyloxiranen umgesetzt werden.

Die Herstellung der Komponente B) folgt dem Stand der Technik. Sie wird in einem Autoklav, der mit einer Heiz- und Kühlvorrichtung, einem Rührwerk, einer Einrichtung zum Verdrängen der Luft (z.B. Vakuumanschluß und Stickstoffzuleitung), gegebenenfalls einer Vorrichtung zur Azeotropentwässerung und einer Vorrichtung zur Dosierung der Alkylenoxide versehen ist, vorgenommen. Weitere Angaben finden sich in z.B. Polymer Syntheses (S.R. Sandler, W. Karo), Academic Press, New York 1980, S. 139 ff.

Als gegebenenfalls weitere Ausgangskomponenten C) geeignet sind Verbindungen mit mindestens zwei gegenüber Isocyanaten reaktionsfähigen Wasserstoffatomen ("reaktiven H-Atomen") und einem Molmassenbereich von 32 bis 399. Auch in diesem Fall versteht man hierunter Hydroxylgruppen und/oder Aminogruppen und/oder Thiolgruppen und/ oder Carboxylgruppen aufweisende Verbindungen, vorzugsweise Hydroxylgruppen und/oder aromatische Aminogruppen aufweisende Verbindungen, die als Kettenverlängerungsmittel oder Vernetzungsmittel dienen. Diese Verbindungen weisen in der Regel ⩾ 2, vorzugsweise 2 und/oder 3, gegenüber Isocyanaten reaktionsfähige Wasserstoffatome auf. Sie werden nur in solcher Art und Menge eingesetzt, daß jeweils die Einphasigkeit des erfindungsgemäßen Polyolgemisches gewahrt bleibt. Auch in diesem Fall können Mischungen von verschiedenen Verbindungen mit mindestens 2 gegenüber Isocyanaten reaktionsfähigen Wasserstoffatomen mit einem Molmassenbereich von 32 bis 399 verwendet werden. Die Verträglichkeit kann in einfachen Vorversuchen bestimmt werden.

Als Beispiele für derartige Verbindungen seien genannt:

Ethandiol, Propandiol-(1,2) und -(1,3), Butandiol-(1,4), -(1,3) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol, Glyzerin, Trimethylolpropan, Hexantriol-(1,2,6), Trimethylolethan, Pentaerythrit, Chinit, Mannit und Sorbit, Ricinusöl, Di-, Tri-, Tetra- und höhere Polyethylenglykole mit Molmassen bis 399, Di-, Tri-, Tetra- und höhere Polypropylenglykole mit Molmassen bis 399, Di-, Triund höhere Polybutylenglykole mit Molmassen bis 399, 4,4'-Dihydroxy-diphenylpropan, Di-hydroxyethyl-hydrochinon, Ethanolamin, Diethanolamin, Diisopropanolamin, N-Methyldiethanolamin, Triethanolamin und 3-Aminopropa-nol, sowie Dimethylolpropionsäure. Als niedermolekulare Polyole können auch die Gemische von Hydroxyaldehyden und Hydroxyketonen ("Formose') bzw. ihre reduzierten Derivate (Formite) eingesetzt werden.

Bevorzugt sind 2- und/oder 3-wertige Polyole, besonders die unverzweigten aliphatischen Diole mit 2 bis zu 8 C-Atomen, wie Butandiol-1,4 und/oder Hexandiol-1,6.

Als Polyamine werden zumeist aromatische Diamine der Art, wie sie in DE-A- 2 854 384 aufgeführt sind, z.B. 4,4'-Diamino-diphenylmethan, verwendet.

Bevorzugt sind relativ niedrig schmelzende, relativ gut lösliche aromatische kernalkylierte Diamine wie Kerndialkylierte Toluylen-2,4- bzw. -2,6-diamine wie 3,5-Diethyl-toluylen-2,4-diamin und/oder 3,5-Diethyl-toluylen-2,6-diamin, 4-Alkyl-3,5-diamino-benzoesäure-iso-butylester, sowie Di-, Tri- oder Tetra-$C_1$-$C_4$-alkyl-di-phenylmethan-4,4'-diamine, gegebenenfalls mit unterschiedlichen Alkylsubstituenten in den verschiedenen Kernen.

Aliphatische Diamine, z.B. Ethylendiamin, Hexan-1,6-diamin sind weniger bevorzugt, können jedoch in Form ihrer weniger reaktiven Aldimin- oder Ketiminderivate besser eingesetzt werden (vgl. US-A- 3 734 894/ DE-A- 2 637 115).

Eine ausführliche Zusammenfassung weiterer geeigneter Kettenverlängerungs- oder Vernetzungsmittel C)

wird in der DE-A-2 854 384 aufgeführt.

Es ist jedoch bevorzugt, im erfindungsgemäßen Polyolgemisch keine weiteren Verbindungen vom Typ C), einzusetzen.

Als lösungsvermittelnde Komponente D) werden Salze verwendet, die Kationen aus der 1., 2. und 3. Hauptgruppe des Periodensystems, Ammonium- sowie Mono- bzw. Tetraalkylammonium-Ionen aufweisen und die als Anionen Reste enthalten, wie sie durch Entfernung mindestens eines Protons aus einer Säure mit einem $K_s$-Wert von mindestens $10^{-7}$ entstehen, wobei die Säure aus der Reihe der Monooder Polycarbonsäuren, der Kohlensäure, der Halogen- oder Pseudohalogenwasserstoffsäuren, sowie der Chalcogensäuren entstammen. Beispiele für solche Säuren sind Mono- oder Polycarbonsäuren mit 1 bis 8 Kohlenstoffatomen wie z.B. aliphatische Mono- bis Tricarbonsäuren, wie Ameisensäure, Essigsäure, Propionsäure, Buttersäure, n-Octansäure, 2-Ethylhexansäure, Glutarsäure, Adipinsäure, Nitrilotriessigsäure, N,N'-Dimethyl-ethylendiamin-diessigsäure oder Halbester oder Halbamide dieser Di- und Tricarbonsäuren oder Hydroxyl- oder Mercapto- oder Aminogruppen aufweisende Mono- oder Polycarbonsäuren wie Glycin, Alanin, Thiolglykolsäure, Äpfelsäure, Weinsäure. Weitere Beispiele sind die Salze der Chlor-, Brom, Jodwasserstoffsäuren, der Rhodanwasserstoffsäuren, der Cyan- oder Isocyanwasserstoffsäure, Schwefelsäure, Salpetersäure oder Phosphorsäure.

Bevorzugt als Kationen sind solche, die der 1. Hauptgruppe entstammen, wie $Li^{\oplus}$, $Na^{\oplus}$, $K^{\oplus}$, besonders bevorzugt ist Kalium$^{\oplus}$ neben $Na^{\oplus}$.

Bevorzugt als Anionen sind die Anionen von aliphatischen $C_1$-$C_8$-Monocarbonsäuren oder diejenigen der Halogenoder Pseudohalogenwasserstoffsäuren, Schwefelsäure, Salpetersäure und Phosphorsäure, bevorzugtes Salz ist Kaliumacetat und insbesonders das hinsichtlich der NCO-Reaktionen inerte Kaliumchlorid.

Die Salze D) werden in einer Menge eingesetzt, daß auf 100 Teile Komponente A) 0,01 bis 5 Teile Salz, bevorzugt 0,1 bis 2,5 Teile Salz kommen. Bei schwerlöslichen Salzen, d.h. bei solchen, wo sich auf Komponente A) weniger als 5 Teile Salz löst, wird maximal die dem Löslichkeitsprodukt des betreffenden Salzes entsprechende Menge gelöst.

Im allgemeinen wird so vorgegangen, daß Komponente D) in Komponente B), gegebenenfalls unter Erwärmen, gelöst und dann diese mit Komponente A) und gegebenenfalls mit Komponente C) vereinigt wird. Da erfindungs-gemäß einphasig stabile, optisch klare Polyolgemische beansprucht werden, muß D) auch im Gemisch mit A) genügend große Löslichkeit aufweisen.

In einer bevorzugten Ausführungsform wird das Salz über die Herstellung von B) in das Polyolgemisch eingeführt: Hierbei wird die Addition des Alkyloxirans an den Vernetzer B)/I basisch (z.B. mit KOH) katalysiert und nach Beendigung der Adduktbildung mit einer Säure neutralisiert (z.B. Essigsäure), die ein in B) lösliches Salz (z.B. Kaliumacetat) ergibt. Dabei wird die Menge des bei der Alkoxylierungsreaktion eingesetzten Katalysators gegebenenfalls nach den oben angegebenen Grenzen der Salzmengen gerichtet.

Der Effekt, daß Salze des nachstehend beschriebenen Definitionsumfangs als Lösungsvermittler zwischen Polyolen und (teil-)alkoxylierten Di- und/oder Triolen der OH-Zahl 1000 bis 1720, vorzugsweise Ethylenglykol oder Butandiol-1,4, in geringer Konzentration zu wirken vermögen, ist neu. Er tritt außerdem im erfindungsgemäßen Sinne nicht bei der Vermischung von Polyetherpolyolen mit freien Di- und/oder Triolen der OH-Zahl 1244 bis 1826, speziell Ethylenglykol oder Butandiol-1,4 auf, sondern nur bei der Verwendung von Umsetzungsprodukten B) aus Polyolen B)/I der OH-Zahl 1244 bis 1826 mit Alkyloxiranen B)/2, wobei die Mischung von Polyolen und Alkyloxiranen bei einem Äquivalentverhältnis 1:0,1 bis 1:0,5 vorzugsweise 1:0,2 bis 1:0,4) vorgenommen wurde.

Als übliche Hilfs- und Zusatzmittel E) kommen Katalysatoren der bekannten Art, z.B. tertiäre Amine wie Dimethylbenzylamin, 1,4-Diaza-bicyclo-(2,2,2)-octan oder Triethanolamin, monocyclische oder bicyclische Amidine, Bis-dialkylamino(alkyl)-ether oder Amidgruppen aufweisende tertiäre Amine in Frage.

Auch basische Katalysatoren wie Alkalihydroxide, Alkaliphenolate oder Alkalialkoholate, ferner organische Metallverbindungen, insbesondere organische Blei- und Zinnverbindungen, können eingesetzt werden, z.B. Zinn-(II)-octoat, Zinn-(II)-laurat, Dibutylzinndilaurat oder deren Gemische.

Es können jedoch auch Reaktionsverzögerer für die Isocyanatreaktion, z.B. sauer reagierende Stoffe, wie Salzsäure oder organische Säurehalogenide, Borsäure oder Schwefeldioxid, ferner Zellregler für Schaumstoffe der an sich bekannten Art, wie Paraffine oder Fettalkohole, oder auch Dimethylpolysiloxane, sowie Pigmente und/oder Farbstoffe sowie Flammschutzmittel der an sich bekannten Art, ferner Stabilisatoren gegen Licht-, Alterungsund Witterungseinflüsse, Weichmacher und fungistatisch und bakteriostatisch wirkende Substanzen zugegeben werden. Weitere Beispiele dieser Zusatzmittel sind im Kunststoff-Handbuch, Band 7, herausgegeben von Vieweg & Höchtlen, Carl Hanser Verlag, München 1966, auf den Seiten 96-113, Treibmittel zur Herstellung von Polyurethanschaumstoffen auf den Seiten 453-455 und 507-510 beschrieben.

Zur Herstellung von Polyurethanen wird die erfindungsge-mäße Polyolmischung als alleinige oder anteilige Reaktionskomponente mit OH-Gruppen zusammen mit Polyisocyanaten und gegebenenfalls weiteren Hilfs- und Zusatzstoffen wie Treibmitteln, Zellreglern, Katalysatoren, farbgebenden Stoffen, Füllstoffen und/oder Fasern verwendet.

Neben der erfindungsgemäßen Polyolmischung können zur Polyurethanbildung weitere höhermolekulare Polyole mit Molmassen zwischen 400 und 10 000, bevorzugt 450 und 6000, in Form der aus der Polyurethanchemie an sich bekannten, vorzugsweise 2, gegebenenfalls auch mehr, aktive Wasserstoffatome (im wesentlichen Hydroxylgruppen) enthaltende Polyester, Polylactone, Polycarbonate, Polyether, Polythioether, Polyester, Polyacetale, Vinylpolymere, wie z.B. OH-funktionelle Polybutadienöle, bereits Urethan- oder Harnstoffgruppen enthaltende Polyhydroxylverbindungen sowie gegebenenfalls modifizierte natürliche Polyole,

bzw. auch andere Zerewitinoff-aktive Gruppen wie Amino-, Carboxyl- oder Thiolgruppen enthaltende Verbindungen eingesetzt werden. Diese Verbindungen entsprechen dem Stand der Technik und sind z.B. in den DE-A-2 302 564, 2 423 764 und 2 549 372 (US-A- 3 963 679), den DE-A-2 402 799, 2 431 846, 2 402 840 (US-A- 3 984 607), der DE-B-2 457 387 (US-A- 4 035 213) sowie besonders in der DE-A-2 854 384 beschrieben.

Erfindungsgemäß bevorzugt sind Hydroxylgruppen-haltige Polyester (z.B. aus Glykolen und Adipinsäure, Phthalsäure, Iso- und/oder Terephthalsäure sowie deren Hydrierungsprodukten) Hydroxypolycarbonate, Polycaprolactone, sowie insbesondere 2-8, vorzugsweise 2-4 OH-Gruppen aufweisende Polyether, die durch Polymerisation von Tetrahydrofuran oder Epoxiden wie Ethylenoxid, Propylenoxid, Butylenoxid, Styroloxid oder Epichlorhydrin mit sich selbst, z.B. in Gegenwart von Lewis-Katalysatoren wie $BF_3$, oder durch Anlagerung dieser Verbindungen vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propan-diol-(1,3) oder -(1,2), Trimethylolpropan, Glycerzin, Sorbit, 4,4'-Dihydroxy-diphenylpropan, Anilin, Ethanolamin oder Ethylendiamin hergestellt werden. Auch Sucrosepolyether sowie auf Formit oder Formose gestartete Polyether kommen erfindungsgemäß in Frage.

Es können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwichen Polyisocyanaten und aminofunktionellen Verbindungen) bzw. Polykondensationsreaktionen (z.B. zwischen Formaldehyd und Phenolen und/ oder Aminen) in situ in den o.g., Hydroxylgruppen aufweisenden Verbindungen ablaufen läßt (vgl. z.B. DE-A-2 324 134 oder 2 639 254. Es ist aber auch möglich, gemäß US-A- 3 869 413 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-A- 3 383 351, 3 304 273, 3 523 093, 3 110 695; DE-B- 1 152 536) oder Polycarbonatpolyolen erhalten werden, sind für das erfindungs-gemäße Verfahren geeignet.

Selbstverständlich können Mischungen der o.g. Verbindungen mit mindestens zwei gegenüber Isocyanaten reaktionsfähigen Wasserstoffatomen mit einem Molekulargewicht von 400 bis 10 000, z.B. Mischungen von Polyethern und Polyestern, eingesetzt werden.

Vertreter dieser erfindungsgemäßen Verbindung sind z.B. in High Polymers, Vol. XVI, "Polyurethanes, Chemistry and Technology', verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl Hanser Verlag, München, 1966, z.B. auf den Seiten 45-71, sowie in Ullmanns Enzyklopädie der Technischen Chemie, Verlag Chemie, Weinheim, 4. Auflage, Band 19, im Stichwort "Polyurethane', S. 301-341 und im Stichwort "PoLyalkylenglykole", S. 31-38, beschrieben.

Als difunktionelle Kettenverlängerungs- bzw. mehrfunktionelle Verbindungen (Vernetzer) mit Molmassen von etwa 18 bis 399 können H-aktive Gruppen aufweisende Verbindungen wie Wasser, Hydrazin, Glykole, Polyamine, Dihydrazidverbindungen, Aminoalkohole etc. verwendet werden, wie sie bereits für die Komponente C) aufgeführt wurden und wie sie üblicherweise für Polyurethansynthesen verwendet werden. Eine ausführliche Aufstellung geeigneter Verbindungen findet sich in der DE-A-2 854 384.

Als Polyisocyanate können die zur Herstellung von Polyurethanen bekannten Polyisocyanate eingesetzt werden, z.B. aliphatische, cycloaliphatische, araliphatische, aromatische und heterocyclische Polyisocyanate, vorzugsweise Diisocyanate, wie sie von z.B. W. Siefken in Justus Liebigs Annalen der Chemie, 562, Seiten 75-136 beschrieben werden, z.B. Hexan-1,6-diisocyanat, 1-Isocyanato-3,3,5-trimethyl-5-isocyanatomethyl-cyclo-hexan, Dicyclohexylmethan-2,4'- und/oder 4,4'-Diiso-cyanat, 1,3- und/oder 1,4-Cyclohexandiisocyanat, gegebenenfalls in beliebigen Gemischen aller möglichen Stereoisomeren.

Besonders geeignet sind die aromatischen Polyisocyanate, wie Toluylen-2,4- und/oder -2,6-diisocyanat (TDI), Di-phenylmethan-4,4'- und/oder -2,4'- und/oder -2,2'-di-isocyanat (MDI) sowie die technischen Polyphenylpolymethylen-polyisocyanate, wie sie durch Anilin-Formaldehyd-Kondensation und anschließende Phosgenierung erhalten und beispielsweise in den GB-A- 874 430 und 848 671 beschrieben werden (Mehrkernpolyisocyanate enthaltendes MDI). Die durch Abwandlung von TDI und MDI erhaltenen modifizierten Polyisocyanate, z.B. mit Polyolen über Urethangruppen modifizierte, Carbodiimidgruppen-modifizierte, Isocyanuratgruppen-modifizierte, biuretisierte, allophanatisierte oder Uretdiongruppenhaltige Polyisocyanate sind Beispiele für abgewandelte technische Isocyanate.

Derart geeignete Polyisocyanate technischer Art sind ausführlich in der DE-A 2 854 384 sowie in dem bereits zitierten Kunststoff-Handbuch, sowie in der bereits zitierten Ullmanns Enzyklopädie, 4. Auflage, Band 19, S. 303-304 angeführt.

Die Polyisocyanate können auch in Form von NCO-Prepolymeren aus den Ausgangspolyisocyanaten und z.B. höhermolekularen Polyolen eingesetzt werden.

Soweit Hilfs- und Zusatzstoffe noch nicht oder in nicht ausreichender Menge und Zusammensetzung enthalten sind, können diese auch zusätzlich in getrennter Dosierung oder in Vermischung mit einer der Reaktionskomponenten wie (zusätzlichen) höhermolekularen Polyhydroxylverbindungen, Polyisocyanaten oder NCO-Prepolymeren, Treibmitteln, Lösungsmitteln und ähnlichen verwendet werden.

Es handelt sich z.B. um die Gruppen der Katalysatoren bzw. Reaktionsverzögerer, Treibmittel, Zellregulatoren, Emulgatoren, Polysiloxane, Füllstoffe, Farbstoffe, Pigmente, Antioxidantien, UV-Absorber, Lichtschutzmittel, Stabilisatoren gegen Stick4xide, Flammschutzmittel, Hydrolyseschutzmittel sowie gegebenenfalls um kleine

Menge an monofunktionellen Kettenabbrechern.

Die Verarbeitung der erfindungsgemäßen Polyole zusammen mit den anderen Reaktanden der Polyurethanbildung kann nach allen an sich bekannten Verfahren und Prozessen erfolgen, z.B. in mehrstufigen Verfahren (NCO-Prepolymerbildung mit anschließender Umsetzung). Die Verarbeitung erfolgt überwiegend mittels entsprechender Dosier-/Misch-/ und/oder Austrags-Geräte bzw. in Formen, wie diese in der Polyurethanverfahrenstechnik üblich sind (vgl. z.B. Ullmanns Enzyklopädie der Technischen Chemie, Verlag Chemie-Weinheim, 4. Auflage, Band 19, Stichwort "Polyurethane", Seite 314-336.

Es können PU-Elastomere in nicht-zelliger Form, als thermoplastische PU-Elastomere, Polyurethankautschuk, oder Gießelastomere, auch in zelliger Form, vorzugsweise in Rohdichten zwischen 300 bis 1000 kg/$m^3$, oder Schaumstoffe in weichelastischer, semiflexibler oder hartelastischer Form, z.B. als Blockschaumstoffe, Formschaumstoffe in breiter Dichte z.B. von 20 bis 400 kg/$m^3$ und je nach Verwendungszweck mit geschlossenen und/oder offenen Zellen hergestellt werden.

Besonders geeignet sind die Polyolgemische dort, wo sie zur Herstellung von Formteilen mit dichter Oberfläche und einem nach innen zunehmend zelligen Kern verwendet werden (RIM-Prozeß zur Herstellung von sog. Integralschaumstoffen).

Diese Anwendung und die Herstellung gegebenenfalls zelliger Polyurethanelastomerer ist besonders bevorzugt.

Die erfindungsgemäßen Polyolgemische können auch zur Herstellung von im wesentlichen linearen, löslichen Polyurethanen für z.B. Beschichtungsmassen, Elasthanfäden oder Lacke, sowie auch zur Herstellung von Dispersionen, sowie allgemein als OH-reaktive Komponenten verwendet werden.

**Beispiele**

Es werden in den nachstehenden Beispielen folgende Polyole verwendet (Prozentangaben bedeuten Gewichts-%).

**Polyol A**

Trifunktionelles, auf Trimethylolpropan gestartetes Polyethertriol der OH-Zahl 27 aus 78 % Propylenoxid und 22 % Ethylenoxid (endständig).

**Polyol B**

Trifunktionelles, auf Trimethylolpropan gestartetes Polyethertriol der OH-Zahl 35 aus 86,5 % Propylenoxid und 13,5 % Ethylenoxid (endständig).

**Polyol C**

Auf einem Gemisch von Trimethylolpropan und Propylenglykol gestartetes Polyetherpolyol der Funktionalität 2,91 und einer OH-Zahl von 56 aus 100 % Propylenoxid (nicht erfindungsgemäß).

**Polyol D**

Auf einem Gemisch von Trimethylolpropan und Propylenglykol (Verhältnis 84:16) gestartetes Polyetherpolyol der Funktionalität 2,78 und einer OH-Zahl 42 aus 100 % Propylenoxid (nicht erfindungsgemäß).

**Polyol E**

Auf Ethylendiamin gestartetes Polyoxypropylenpolyetherpolyol der OH-Zahl 60 (nicht erfindungsgemäß).

**Polyol F**

Trifunktionelles, auf Trimethylolpropan gestartetes Polyethertriol der OH-Zahl 28 aus 87 % Propylenoxid und 13 % Ethylenoxid (endständig).

**Polyol G**

Trifunktionelles, auf Trimethylolpropan gestartetes Polyethertriol der OH-Zahl 28 aus 83 % Propylenoxid und 17 % Ethylenoxid (endständig).

**Polyol H**

Difunktionelles Polypropylenglykolether der OH-Zahl 56 (nicht erfindungsgemäß).

**Polyol I**

Difunktionelles, auf Propylenglykol gestartetes Polyetherdiol der OH-Zahl 56 aus 92,5 % Propylenoxid und 7,5 % Ethylenoxid (endständig).

**Polyol K**

Difunktionelles, auf Propylenglykol gestartetes Polyetherdiol der OH-Zahl 56 aus 80 % Propylenoxid und 20 % Ethylenoxid (endständig).

**Polyol L**

Polyoxypropylenglykolether der OH-Zahl 28 (nicht erfin-dungsgemäß).

**Polyol M**

Difunktionelles, auf Propylenglykol gestartetes Polyetherdiol der OH-Zahl 28 aus 85 % Propylenoxid und 15 % Ethylenoxid (endständig).

**Polyol N**

Difunktionelles, auf Propylenglykol gestartetes Polyetherdiol der OH-Zahl 28 aus 80 % Propylenoxid und 20 % Ethylenoxid (endständig).
Es werden in den Beispielen folgende Ethylenglykol/Propylenoxid-Addukte verwendet:

**Addukt 1**

Aus 1 Mol Ethylenglykol und 0,25 Mol Propylenoxid

**Daten:**

OH-Zahl (mg KOH/g) 1363
pH 5,85

Viskosität (mPa.s/25° C) 25,7
Säurezahl (mg KOH/g) 0,04
Wassergehalt (%) 0,01

**gaschromatographische Zusammensetzung:**

64,1 % Ethylenglykol
32,2 % Monopropoxylierungsprodukt
3,7 % Dipropoxylierungsprodukt
(0,1 % mehrfach propoxylierte Produkte)
Addukt I (Molverhältnis Ethylenglykol(EG)/Propylenoxid(PO) = 1:0,25) wurde wie folgt hergestellt:
In einem Autoklav, der mit einer Heiz- und Kühlvorrichtung, einem Rührwerk, einer Einrichtung zum Verdrängen der Luft (z.B. Vakuumanschluß und Stickstoffzuleitung), und einer Vorrichtung zur Dosierung des Alkylenoxids versehen war, wurden

7294 g Ethylenglykol (117,6 Mol) bei Raumtemperatur vorgelegt. Durch zweimaliges Evakuieren und Wiederauffüllen des Reaktionsgefäßes mit Stickstoff wurde der Luftsauerstoff entfernt. Nach Erwärmen auf 80° C wurden 90 g 50 %ige wäßrige Kalilauge zugegeben. Anschließend wurde bei einem Druck von 0,4 bis 0,6 bar und einer Temperatur von 100 bis 105°C 1706 g (29,4 Mol) Propylenoxid allmählich zudosiert (~3 Stunden; Molverhältnis EG/PO = 1:0,25) und durch Kühlen oder Heizen des Reaktionsgemisches die Reaktionstemperatur in diesem Bereich gehalten. Nach beendeter Propylenoxidzugabe wurde noch weitere 3 Stunden bei 100 bis 105° C gerührt. Das alkalische Polymerisat wurde nach Zugabe von 900 g Wasser mit 319,5 g 12,5 %iger Schwefelsäure neutralisiert. Das Wasser wurde bei 90 bis 105° C im Vakuum abdestilliert, anschließend das Addukt von den abgeschiedenen Salzen abfiltriert. Das erhaltene farblose Produkt hatte die oben aufgeführte Zusammensetzung und Eigenschaften.

**Addukte II, III**

Ein einem ähnlichen Ansatz wurde die Kalilauge durch Absorption an ein synthetisches Magnesiumsilikat (Britesorb © der Philadelphia Quartz Company, USA) entfernt. Die physikalischen Eigenschaften sind wie folgt:

**Addukt II**

(Molverhältnis Ethylenglykol/Propylenoxid = 1:0,25)
Hydroxylzahl (mg KOH/g) 1415
pH-Wert 8,95
Wassergehalt (%) 0,02
Viskosität (mPa.s/25° C) 24,2
Ein dritter Ansatz wurde mit Phosphorsäure neutralisiert. Nach Abdestillieren des Wassers und Filtration der Salze ergaben sich folgende Werte:

**Addukt III**

Hydroxylzahl (mg KOH/g) 1496
pH-Wert 8,65
Wassergehalt (%) 0,07
Viskosität (mPa.s/25° C) 24,9
Säurezahl (mg KOH/g) 0 05

**Addukt IV** (erfindungsgemäß)

Addukt 1 wurde mit 1 Gew.-% Kaliumacetat versetzt. Es trat vollständige Lösung des Salzes ein.

**Addukt V** (erfindungsgemäß)

Ausgangsmaterialien: Ethylenglykol wurde destilliert und hatte dann folgende Kenndaten: Wassergehalt 0,04 %, Brechungsindex bei 20°C 1,4314. Das verwendete Propylenoxid hatte folgende Kenndaten: Wassergehalt 0,04 %, Brechungsindex bei 20°C 1,3658 bis 1,3664.

In einem 6 1 Autoklaven werden 25 g Kaliumhydroxid-Pulver eingefüllt. Der Autoklav wird verschlossen und 15 Minuten mit Stickstoff beschickt, um die Luft aus dem Autoklaven zu verdrängen. Danach wurden 4340 g Ethylenglykol (70 Mol) durch das Einlaßrohr in den Autoklaven eingefüllt. Unter Stickstoff wird auf etwa 100°C hochgeheizt. Innerhalb 3,5 Stunden werden dann 1050 g Propylenoxid (18,1 Mol) in etwa 40 Portionen von ca. 25 bis 30 g zugesetzt (Molverhältnis EG/PO = 1:0,259).

Bei jeder zugesetzten Menge Propylenoxid steigt der Druck im Autoklaven auf ca. 2,4 at an und fällt mit laufender Reaktion auf 0,3 at- ab (1 at = 98066,5 Pa).

Nach Beendigung der Reaktion wird 30 Minuten bei 100°C nachgerührt. Dann wird auf Raumtemperatur abgekühlt und der Autoklav geöffnet. Es wird mit wasserfreier Essigsäure auf pH 8-9 eingestellt. der pH-Wert wird elektrisch unter Zusatz von 10 % Wasser gemessen. Der Autoklaven-Inhalt wird in eine Saugflasche eingesaugt und gewogen. Die Ausbeute ist quantitativ. Das Produkt enthält 0.8 Gew.-% Kaliumacetat.

Kennzahlen:
Wassergehalt 0,2-0,3 %
Brechungsindes bei 20°C 1,4368-1,4378
pH-Wert 8,5
OH-Zahl 1462
Viskosität (mPa.s/25°C) 32

**Addukt VI**

Nach den gleichen Verfahren wie bei Addukt I) werden 6132 g Ethylenglykol (98,9 Mol) mit 2868 g Propylenoxid (49,45 Mol) umgesetzt (Molverhältnis EG/PO = 1:0,5). Nach Neutralisierung mit 12,5 %iger Schwefelsäure und Aufarbeitung

erhält man ein farbloses Produkt mit folgenden Daten:
Hydrolysezahl (mg KOH/g) 1200
pH-Wert 5,5
Wassergehalt (%) 0,02
Viskosität (mPa.s/25°C 29,3
Säurezahl (mg KOH/g) 0,05

**Addukt VII** (erfindungsgemäß)

Addukt VI wurde mit 0,8 Gew.-% Kaliumacetat versetzt. Es trat vollständige Lösung ein.

**Addukt VIII** (nicht erfindungsgemäß)

Aus 1 Mol Ethylenglykol und 1 Mol Propylenoxid.

**Analytische Daten**

OH-Zahl (mg KOH/g) 855
Säurezahl (mg KOH/g) 0,06
Wassergehalt (%) 0,03
Viskosität (mPa.s/25°C) 46,6
pH-Wert 7,5

**gaschromatographisch bestimmte Zusammensetzung**

16 Gew.-% Ethylenglykol
46,4 Gew.-% monopropoxyliertes Ethylenglykol

33,6 Gew.-% dipropoxyliertes Ethylenglykol
3,8 Gew.-% tripropoxyliertes Ethylenglykol
0,2 Gew.-% höherpropoxyliertes Ethylenglykol

**Addukt IX** (nicht erfindungsgemäß)

Aus 1 Mol Ethylenglykol und 0,25 Mol Ethyloxiran (Butylen-1,2-oxid).

**Analytische Daten**

OH-Zahl (mg KOH/g) 1332 (Bestimmung mittels Phthalsäureanhydrid)
1364 (Bestimmung mittels Essigsäureanhydrid)
Säurezahl (mg KOH/g) 0,03
Wassergehalt (%) 0,12
Viskosität (mPa.s/25° C) 27,3
pH-Wert 9,4
Dichte (25° C) 1,07

**gaschromatographisch bestimmte Zusammensetzung**

67,7 % Ethylenglykol
29,9 % monobutoxyliertes Ethylenglykol
2,4 % dibutoxyliertes Ethylenglykol

**Addukt X** (erfindungsgemäß)

Addukt IX wurde mit 0,6 Gew.-% Natriumacetat versetzt. Es trat vollständige Lösung ein.

**Addukt XI** nicht erfindungsgemäß - salzfrei -

Aus 1 Mol Ethylenglykol und 0,25 Mol 2,2-Dimethyl-oxiran (Isobutylenoxid).

**Analytische Daten**

OH-Zahl (mg KOH/g) 1442 (Bestimmung mittels Phthalsäureanhydrid)
1459 (Bestimmung mittels Essigsäureanhydrid)
Säurezahl (mg KOH/g) 0,26
Wassergehalt (%) 0,07
Viskosität (mPa.s/25° C) 25,6
pH-Wert 4,85

**gaschromatographisch bestimmte Zusammensetzung**

87,3 Gew.-% Ethylenglykol
7,8 Gew.-% monobutoxyliertes Ethylenglykol
4,8 Gew.-% dibutoxyliertes Ethylenglykol

**Addukt XII** (erfindungsgemäß)

Addukt XI wurde mit 0,8 Gew.-% Natriumacetat versetzt. Es trat vollständige Lösung ein.
Addukt XIII (nicht erfindungsgemäß) - siehe Beispiel 9).

**Beispiel 1**

Polyol A (100 g) wird mit verschiedenen Mengen verschiedener Ethylenglykol-Propylenoxid-Addukte (Molverhältnis Ethylenglykol/Propylenoxid 1:0,25) unter Rühren vermischt, bei Raumtemperatur gelagert und visuell auf Einphasigkeit bzw. Phasentrennung untersucht.

1.1. Polyol A/Addukt 1 (nicht erfindungsgemäß)
1.2. Polyol A/Addukt II (nicht erfindungsgemäß).
1.3. Polyol A/Addukt III (nicht erfindungsgemäß)
1.4. Polyol A/Addukt IV (erfindungsgemäß; salzhaltig)
1.5. Polyol A/Addukt V (erfindungsgemäß; salzhaltig)
Die erhaltenen Ergebnisse sind in Tabelle 1 zusammengefaßt.

**Tabelle 1**

Phasenstabilität von Polyol A/Ethylenglykol-Propylenoxid-Addukten

| Menge Addukt (Teile) | Beispiel | 1.1. (nicht | 1.2. erfindungsgem.) | 1.3. | 1.4. (erfindungsgem.) | 1.5. |
|---|---|---|---|---|---|---|
| 5 | | + | + | + | +(95) a) | + |
| 10 | | + | + | + | +(157) | + |
| 15 | | + | + | + | +(214) | + |
| 20 | | + | + | + | +(266) | + |
| 25 | | + | + | + | +(314) | + |

**Tabelle 1** (Fortsetzung)

| Menge Addukt (Teile) | Beispiel | 1.1. (nicht | 1.2. erfindungsgem.) | 1.3. | 1.4. (erfindungsgem.) | 1.5. |
|---|---|---|---|---|---|---|
| 30 | | - | - | - | + (358) | + |
| 40 | | - | - | - | + (437) | + |
| 45 | | - | - | - | - (472) | - |
| 50 | | - | - | - | - (505) | - |
| 100 | | - | - | - | - (745) | - |

+ bedeutet: Einphasigkeit über 6 Monate;
– bedeutet: nicht homogen;
a) Misch-OH-Zahl (rechnerisch), in mg KOH/g.

**Vergleichsbeispiele 1.6. und 1.7. (nicht erfindungsgemäß)**

Vergleichsbeispiel 1.6. (s. Tabelle 2) zeigt die Ve träglichkeit von Polyol A/Ethylenglykol-Gemischen, Vergleichsbeispiel 1.7. (s. Tabelle 3) die Verträglichkeit von Polyol A/Ethylenglykol/Propandiol-1,2-Gemischen auf.
Die erhaltenen Ergebnisse sind in den Tabellen 2 un zusammengefaßt.

**Tabelle 2**

Phasenstabilität von polyol A/Ethylenglykol-Gemischen (1.6.; nicht erfindungsgemäß)

**Zusätze zu je 100 g Polyol A**

| Ethylenglykol [g] | Misch-OH-Zahl | Phasen |
|---|---|---|
| - | 27 | (1) |
| 5 | 112 | 1 |
| 10 | 189 | 2 |
| 15 | 259 | 2 |
| 20 | 324 | 2 |
| 25 | 383 | 2 |
| 30 | 438 | 2 |
| 50 | 620 | 2 |

**Tabelle 3**

Phasenstabilität von Polyol A/Ethylenglykol/Propan-diol-1,2-Gemischen (1.7.; nicht erfindungsgemäß)

**Zusätze zu je 100 g Polyol A**

| Ethylenglykol [g] + | Propandiol-1,2 [g] | Misch-OH-Zahl | Phasen |
|---|---|---|---|
| 6,67 | 6,67 | 198 | 1 |
| 6,67 | 13,33 | 287 | 1 |
| 6,67 | 26,67 | 409 | 1 |
| 6,67 | ≥ 40 | 508 | 2 |
| 13,3 | 6,67 | 305 | 2 |
| 20 | 6,67 | 384 | 2 |
| 26,67 | 6,67 | 455 | 2 |
| 33,33 | 6,67 | 519 | 2 |
| 40 | 6,67 | 578 | 2 |

(Handschriftliche Klammern mit „≥“ an den Zeilen 13,3–40 der Spalte Propandiol-1,2 und an den Werten 508–578 der Spalte Misch-OH-Zahl.)

**Zusammenfassung der Ergebnisse von Beispiel 1**

Ein Gemisch aus Polyol A und Ethylenglykol ist nur bis zu einem Ethylenglykolgehalt, der einer Gemisch-OH-Zahl von ca. 150 mg KOH/g entspricht, einphasig. Steigert man den Ethylenglykol-Anteil, so tritt Phasentrennung ein (Beispiel 1.6.).

Ersetzt man Ethylenglykol durch ein ca. 64 Gew.-% Ethylenglykol enthaltendes Ethylenglykol/Propylenoxid-Addukt (salzfreie Addukte I-III, Vergleichsbeispiele 1.1., 1.2. und 1.3.), so wird zwar ein einphasiges Gemisch mit wesentlich höherer Gemisch-OH-Zahl erreicht, doch ist diese Gemisch-OH-Zahl noch wesentlich geringer als bei der Verwendung der salzhaltigen, erfindungsgemäßen Addukte IV und V (Beispiel 1.4., 1.5.). Verwendet man Addukt IV oder V, so kann z.B. eine Gemisch-OH-Zahl von ca. 450 mg KOH/g erreicht werden. Dies entspricht ca. 27 Gew.-% freien Ethylenglykols auf 100 Teile Polyol A.

Versucht man diesen Effekt dadurch nachzustellen, daß verschiedene Mengen eines Ethylenglykol/Propandiol-1,2-Gemisches mit verschiedenen Ethylenglykol/Propan-diol-1,2-Verhältnissen mit Polyol A vermischt werden, so kann zwar eine höhere Gemisch-OH-Zahl als bei der Vermischung mit reinem Ethylenglykol, jedoch bei weitem nicht eine so hohe Gemisch-OH-Zahl wie bei der Verwendung von erfindungsgemäßen salzhaltigen Addukten IV und V erreicht werden.

Desgleichen ist der Anteil an Ethylenglykol, der so homogen mit Polyol A vermischt werden kann, sowohl absolut als in Beziehung auf das Polyol A als auch in Beziehung auf das niedermolekulare Gemisch aus Ethylenglykol und Propandiol-1,2 kleiner als bei der Verwendung der erfindungsgemäßen Addukte IV und V.

Außerdem zeigt dieses Beispiel, daß es zur Herstellung der erfindungsgemäßen Polyolgemische gleichgültig ist, ob die löslichkeitserhöhende Salzkomponente D nachträglich dem Propylenoyid-Adduktgemisch beigefügt wird (Beispiel 1.4.) oder ob es in situ bei der Herstellung des Ethylenglykol/Propylenoxid-Addukts erzeugt wird (Beispiel 1.5.).

**Beispiel 2** (nicht erfindungsgemäß)

In diesem Beispiel wird gezeigt, daß

2.1. durch Propoxylierung von Ethylenglykol mit Propylenoxid, die bei einem Verhältnis von 1 Mol Ethylenglykol auf 1 Mol Propylenoxid (Addukt VIII) vorgenommen wurde und (s. Tabelle 4)

2.2. Rückverdünnung von VIII mit Ethylenglykol und Verwendung dieses Produktgemisches nicht die gleichen guten Ergebnisse (s. Tabelle 5) wie bei Verwendung des Propoxylierungsproduktes aus Beispiel 1 (Addukt IV o. V.) erlangt werden.

2.1. Zusatz von Addukt VIII

100 g Polyol A und verschiedene Mengen Addukt VIII werden bei Raumtemperatur miteinander vermischt. Die erhaltenen Daten sind in Tabelle 4 aufgelistet.

**Tabelle 4**

Phasenstabilitäten von Polyol A/Addukt VIII-Gemischen (nicht erfindungsgemäß) (Zusätze zu je 100 g Polyol A)

| Addukt VIII [g] | Misch-OH-Zahl | EG[1) ] in Gew.-% | Phasen |
|---|---|---|---|
| 5 | 66 | 0,76 | 1 |
| 10 | 102 | 1,45 | 1 |
| 15 | 135 | 2,09 | 1 |
| 20 | 165 | 2,67 | 1 |
| 25 | 193 | 3,20 | 1 |
| 30 | 218 | 3,69 | 1 |
| 40 | 264 | 4,57 | 1 |
| 50 | 303 | 5,33 | 1 |
| 100 | 441 | 8,00 | 1 |
| 200 | 579 | 10,67 | 1 |

1) EG = Ethylenglykol-Gehalt in der Mischung (in Gew.-%)

2.2. Zusatz von Addukt VIII plus Ethylenglykol.

100 g Polyol A und verschiedene Mengen Addukt VIII werden bei Raumtemperatur miteinander vermischt und mit verschiedenen Mengen Ethylenglykol rückverdünnt. Die erhaltenen Ergebnisse sind in Tabelle 5 aufgelistet.

**Tabelle 5**

Phasenstabilitäten von Polyol A/Ethylenglykol/Addukt VIII-Gemischen (nicht erfindungsgemäß) (Zusätze zu je 100 g Polyol A)

| Ethylen-glykol /g/ | Addukt VIII /g/ | Misch-OH-Zahl | EG[1)] | Phasen |
|---|---|---|---|---|
| 6,67 | 60 | 272 | 9,76 | 1 |
| 13,33 | 53,33 | 297 | 13,12 | 1 |
| 20 | 46,67 | 321 | 18,48 | 2 |
| 26,67 | 40 | 346 | 19,84 | 2 |
| 33,33 | 33,33 | 371 | 23,2 | 2 |
| 40 | 26,67 | 396 | 26,56 | 2 |
| 46,67 | 20 | 421 | 29,92 | 2 |
| 53,33 | 13,33 | 446 | 33.28 | 2 |
| 60 | 6,67 | 470 | 36,64 | 2 |
| - | 40 | 278 | 4,57 | 1 |
| 6,67 | 33,33 | 325 | 8,57 | 1 |
| 13,33 | 26,67 | 372 | 12,57 | 2 |
| 20 | 20 | 419 | 16,57 | 2 |
| 26,67 | 13,33 | 466 | 20,57 | 2 |
| 33,33 | 6,67 | 514 | 24,57 | 2 |

1) EG = Ethylenglykol-Gehalt in der Mischung (in Gew.-%)

**Zusammenfassung der Ergebnisse von Beispiel 2**

Dieser Versuch zeigt, daß unter Verwendung von salzfreiem Addukt VIII zwar wesentlich höhere Gemisch-OH-Zahlen einphasig stabiler Gemische zu erreichen sind, daß aber nicht die gewünschte hohe Ethylenglykolmenge zu erreichen ist. So ist die anteilige Ethylenglykol-Menge selbst bei der Verwendung von 100 Teilen Addukt VIII auf 100 Teile Polyol A (s. Tabelle 4) mit ca. 16 g (8 Gew.%) wesentlich geringer als bei der Beimischung von 40 Teilen Addukt IV oder Addukt V.

**Beispiel 3**

Dieses Beispiel verdeutlicht die Wirksamkeit der Addukte IV und V zur Herstellung phasenstabiler Polyolgemische mit verschiedenen Polyolen.

3.1. (Vergleichsversuch - nicht erfindungsgemäß)

Es werden verschiedene Polyethertriole mit Ethylenglykol vermischt und auf Einphasigkeit untersucht (Tabelle 6).

3.2. (erfindungsgemäß)

Es werden verschiedene Polyethertriole mit Addukt IV vermischt und auf Einphasigkeit untersucht (Tabelle 7).

3.3. (erfindungsgemäß)

Es werden verschiedene Polyethertriole mit Addukt V vermischt und auf Einphasigkeit untersucht. Es werden die gleichen Effekte wie bei Verwendung von Addukt IV (Beispiel 3.2.) erhalten (Tabelle 7).

**Tabelle 6**

Phasenstabilitäten verschiedener Polyethertriol/Ethylenglykol-Gemische (nicht erfindungsgemäß)

| 100 g Polyethertriol | Ethylenglykol | Misch-OH-Zahl | Phasen |
|---|---|---|---|
| Polyol B | 5 g | 119 | 1 |
| Polyol B | ≥10 g | ≥196 | 2 |
| Polyol C | ≥ 5 g | ≥139 | 2 |
| Polyol D | 5 g | 126 | 1 |
| Polyol D | ≥10 g | ≥202 | 2 |
| Polyol E | ≥ 5 g | ≥143 | 2 |

**Tabelle 7**

Phasenstabilitäten verschiedener Polyethertriol/ Addukt IV- oder V-Gemische

| 100 g Polyethertriol | Addukt IV o. V | Misch-OH-Zahl | Phasen |
|---|---|---|---|
| Polyol B | 5 g | 103 | 1 |
| Polyol B | ≥ 10 g | ≥165 | 2 |
| Polyol C | 5 | 123 | 1 |
| Polyol C | ≥10 g | ≥184 | 2 |
| Polyol D | 5 g | 110 | 1 |
| Polyol D | ≥10 g | ≥171 | 2 |
| Polyol E | 5 g | 127 | 1 |
| Polyol E | ≥10 g | ≥187 | 2 |

**Zusammenfassung von Beispiel 3**

Beispiel 3 zeigt, daß unter den Polyolen A-E Polyol A bezüglich seiner Mischbarkeit mit Addukt IV oder V eine Vorzugsstellung einnimmt (je höher der Oxyethylengruppengehalt im Polyoxyalkylenpolyol, um so günstiger die Löslichkeit).

**Beispiel 4**

Beispiel 4 untersucht die Mischbarkeiten der Polyole A, K und L mit den Addukten IV, V und (zum Vergleich) VIII. Die Polyole A, K und L unterscheiden sich im wesentlichen nur durch ihren unterschiedlich großen, endständigen Oxyethylenblöcke.

Die Mischbarkeiten der Polyole A, K und L mit den Addukten IV, V und VIII sind in Tabelle 8 aufgeführt.

Beispiel 4.1. Gemische von 100 Teilen Polyol A, K und L mit 30 Teilen Addukt IV

Beispiel 4.2. Gemische von 100 Teilen Polyol A, K und L mit 30 Teilen Addukt V

Beispiel 4.3. Gemische von 100 Teilen Polyol A, K und L mit 30 Teilen Addukt VIII

**Tabelle 8**

Phasenstabilitäten der Gemische von Polyol A, K und L mit Addukten IV, V und VIII

| | 4.1. Addukt IV | 4.2. Addukt V | 4.3. Addukt VIII |
|---|---|---|---|
| Polyol A | +(358) | +(358) | +(219) |
| Polyol K | -(359) | -(359) | +(220) |
| Polyol L | -(359) | -(359) | +(220) |

**Zusammenfassung der Ergebnisse von Beispiel 4**

Beispiel 4 zeigt, daß nur Polyol A mit den Addukten IV und V auch in den angegebenen hohen Gewichtsverhältnissen einphasig lagerstabile Gemische ergibt, während Polyole K und L dies nicht mehr tun. Dies kann, bei nahezu identischem Molekulargewicht und OH-Zahl nur an der Größe Art des endständigen Oxyethylen-Blocks liegen. Beispiel 4 verdeutlicht also, daß hohe Misch-OH-Zahlen mit einem hohen Ethylenglykol-Anteil nur in der Kombination von Polyolen des Typs A, d.h. mit höheren Oxyethylenanteilen mit den Addukten IV und V verwirklicht werden können.

Addukt VIII hingegen ist zwar mit allen drei Polyolen in den angegebenen Gewichtsverhältnissen mischbar, erbringt aber wesentlich geringere Misch-OH-Zahlen.

**Beispiel 5**

Beispiel 5 untersucht, inwieweit die in den Beispielen 1-4 an trifunktionellen Polyethertriolen gewonnenen Erkenntnisse für lineare Polyether gültig sind.

Addukte IV und V, die sich identisch verhielten, und Addukt VIII, das als Vergleich eingesetzt wurde, wurden mit den Polyolen H-Q vermischt und auf Einphasigkeit untersucht.

Die Ergebnisse sind in Tabelle 9 aufgelistet.

**Tabelle 9**

Stabilität von Gemischen aus den Polyethern H-N mit den Polyolen IV(V) bzw. VIII

| 100 g Polyether | Addukt /g/ | Misch-OH-Zahl | EG[1)] | Phasen |
|---|---|---|---|---|
| Polyol H | 5 Addukt IV o. V | 123 | 3,05 | 1 |
| Polyol H | 10 " | 184 | 5,82 | 2 |
| Polyol H | 20 " | 290 | 10,67 | 2 |
| Polyol H | 30 " | 380 | 14,76 | 2 |
| Polyol I | 5 " | 123 | 3,05 | 1 |
| Polyol I | 10 " | 184 | 5,82 | 1 |
| Polyol I | 20 " | 290 | 10,67 | 2 |
| Polyol I | 30 " | 380 | 14,76 | 2 |
| Polyol K | 5 " | 123 | 3,05 | 1 |
| Polyol K | 10 " | 184 | 5,82 | 1 |
| Polyol K | 20 " | 290 | 10,67 | 1 |
| Polyol K | 30 " | 380 | 14,76 | 1 |
| Polyol K | 40 " | 457 | 18,28 | 1 |
| Polyol K | 45 " | 492 | 19,86 | 2 |
| Polyol K | 50 " | 525 | 21,33 | 2 |
| Polyol L | 5 " | 96 | 3,05 | 2 |
| Polyol L | 10 " | 158 | 5,82 | 2 |
| Polyol L | 20 " | 267 | 10,67 | 2 |
| Polyol L | 30 " | 359 | 14,76 | 2 |
| Polyol M | 5 " | 96 | 3,05 | 1 |
| Polyol M | 10 " | 158 | 5,82 | 2 |
| Polyol M | 20 " | 267 | 10,67 | 2 |
| Polyol M | 30 " | 359 | 14,76 | 2 |

**Tabelle 9** (Fortsetzung)

| 100 g Polyether | Addukt /g/ | Misch-OH-Zahl | EG[1)] | Phasen |
|---|---|---|---|---|
| Polyol N | 5 Addukt IV o. V | 96 | 3,05 | 1 |
| Polyol N | 10 " | 158 | 5,82 | 1 |
| Polyol N | 20 " | 267 | 10,67 | 1 |
| Polyol N | 30 " | 359 | 14,76 | 2 |
| Vergleich (nicht erfindungsgemäß) | | | | |
| Polyol H | 5-30 Addukt VIII | 268[2)] | 3,69 | 1 |
| Polyol I | 5-30 Addukt VIII | 268[2)] | 3,69 | 1 |
| Polyol K | 5-30 Addukt VIII | 268[2)] | 3,69 | 1 |
| Polyol L | 5-30 Addukt VIII | 244[2)] | 3,69 | 1 |
| Polyol M | 5-30 Addukt VIII | 244[2)] | 3,69 | 1 |
| Polyol N | 5-30 Addukt VIII | 244[2)] | 3,69 | 1 |

1) vgl. Tabelle 4
2) OH-Zahlen bei 30 Tlen. Addukt

**Zusammenfassung von Beispiel 5**

Auch hier zeigt sich, daß die Erreichung einer möglichst hohen Misch-OH-Zahl nur unter Verwendung von Polyolen möglich ist, die einen möglichst großen, endständigen Ethylenoxid-Block besitzen.

Auch hier ist Addukt VIII wesentlich besser verträglich, doch können hier nicht so hohe Misch-OH-Zahlen wie bei der Verwendung von Addukt IV oder V erreicht werden.

**Beispiel 6**

Beispiel 6 vergleicht die Wirksamkeit der Addukte VI und VII bezüglich ihrer Wirksamkeit bei der Homogenisierung der Polyetherpolyole A-N, dabei wird mit Addukt IV verglichen.

Beispiel 6.1. Verträglichkeit von 100 Teilen Polyetherpolyol A-N mit 25 Teilen salzfreiem Addukt VI (EG/PO-Addukt 1:0,5) (nicht erfindungsgemäß)

Beispiel 6.2. Verträglichkeit von 100 Teilen Polyetherpolyol A-N mit 25 Teilen Addukt VII (salzhaltiges EG/PO-Addukt 1:0,5-salzhaltig) (erfindungsgemäß)

Beispiel 6.3. Verträglichkeit von 100 Teilen Polyetherpolyol A-N mit 25 Teilen Addukt IV (EG/ PO-Addukt 1:0,25-salzhaltig) (erfindungs-gemäß)

Die Ergebnisse sind in Tabelle 10 aufgelistet.

**Tabelle 10**

Phasenstabilitäten von Gemischen der Polyole A-N mit den Addukten VI, VII und IV (+: einphasig, - zweiphasig)

| Addukt / Polyetherpolyol | 6.1. VI (nicht erfindungsgemäße Addukte | 6.2. VII | 6.3. IV |
|---|---|---|---|
| | | erfindungsgemäße Addukte | |
| Polyol A | + | + | + |
| Polyol B | - | - | - |
| Polyol C[2)] | - | - | - |
| Polyol D[2)] | - | - | - |
| Polyol E[2)] | - | - | - |
| Polyol F | - | - | - |
| Polyol G | - | + | - |
| Polyol H[2)] | - | - | - |
| Polyol I | - | - | - |
| Polyol K | + | + | + |
| Polyol L | - | - | - |
| Polyol M | - | - | - |
| Polyol N | + | + | + |

[2)] nicht erfindungsgemäße Polyether

Beispiel 7 zeigt, daß Verwendung von Addukt VII anstelle von Addukt IV im untersuchten Konzentrationsbereich keine besonderen Vorteile erbringt.

**Beispiel 7**

Beispiel 7 vergleicht die Wirksamkeit der Addukte IX, X, XI und XII bezüglich der Bildung von einphasig homogenen Gemischen mit den Polyetherpolyolen A, F und G.

7.1. Verträglichkeit von 100 Teilen Polyole A, F und G mit 5 bis 50 Teilen Addukt IX (nicht erfindungs-gemäßes Addukt)

7.2. Verträglichkeit von 100 Teilen Polyole A, F und G mit 5 bis 50 Teilen Addukt X (erfindungsgemäßes Addukt)

7.3. Verträglichkeit von 100 Teilen Polyole A, F und G mit 5 bis 50 Teilen Addukt XI (nicht erfindungs-gemäßes Addukt)

7.4. Verträglichkeit von 100 Teilen Polyole A, F und G mit 5 bis 50 Teilen Addukt XII (erfindungsgemäßes Addukt)

Die Ergebnisse sind in Tabelle 11 aufgelistet.

**Tabelle 11**

Phasenstabilitäten von Gemischen der Polyole A, F und G mit den Addukten IX, X, XI und XII

| Polyol (je 100 g) / Addukt | Polyol A | Polyol F | Polyol G |
|---|---|---|---|
| 5 Teile Addukt IX | + | + | + |
| 10 Teile Addukt IX | + | + | + |
| 20 Teile Addukt IX | + | - | + |
| 30 Teile Addukt IX | + | - | - |
| 50 Teile Addukt IX | - | - | - |
| 5 Teile Addukt X | + | + | + |
| 10 Teile Addukt X | + | + | + |
| 20 Teile Addukt X | + | - | + |
| 30 Teile Addukt X | + | - | + |
| 50 Teile Addukt X | + | - | + |
| 5 Teile Addukt XI | + | + | + |
| 10 Teile Addukt XI | + | - | + |
| 20 Teile Addukt XI | - | - | - |
| 30 Teile Addukt XI | - | - | - |
| 50 Teile Addukt XI | - | - | - |
| 5 Teile Addukt XII | + | + | + |
| 10 Teile Addukt XII | + | + | + |
| 20 Teile Addukt XII | + | - | - |
| 30 Teile Addukt XII | + | - | - |
| 50 Teile Addukt XII | + | - | - |

+ : Einphasigkeit

- : Zweiphasigkeit

**Beispiel 8**

Beispiel 8 verdeutlicht die Wirksamkeit verschiedener Salze bei der Homogenisierung von Addukt 1 mit Polyol A.

25 bzw. 35 Teile einer höchstens 1 %igen Lösung der in Tabelle 12 aufgeführten Salze in Addukt 1 wurden mit 75 bzw. 65 Teilen Polyol A versetzt und auf Einphasigkeit untersucht.

**Tabelle 12**

Phasenstabilitäten von Addukt I-Salz/Polyol A-Gemischen

| Salz | 25 Teile | 35 Teile |
|---|---|---|
| Li-pivalat | + | - |
| NaCl | + | - |
| $NaHCO_3$ | + | - |
| $Na_2SO_4$ | + | - |
| NaI | + | - |
| Na-formiat | + | - |
| Na-acetat | + | - |
| $KHCO_3$ | + | + |
| KSCN | + | + |
| KBr | + | + |
| K-octoat | + | - |
| $NH_4$-acetat | + | - |
| Mg-acetat | + | - |
| Ca-acetat | + | - |
| Ca-octoat | + | - |
| $BaCl_2$ | + | - |
| Ba-acetat | + | - |
| Ba-octoat | + | - |
| Al-acetat | + | - |

**Beispiel 9**

**9.1 Butandiol-I,4/Propylenoxid-Addukt (1:0,25 mol)**

Das Addukt wurde durch Propoxylierung von Butandiol-1,4 im angegebenen Molverhältnis mit KOH-Katalyse, sowie an-schließender Neutralisation mit Schwefelsäure, Vakuumbehandlung und Abfiltration der Kaliumsalze (entsprechend Addukt I) hergestellt.

Das erhaltene Addukt XIII zeigt folgende Zusammensetzung:
68,8 Gew.-% Butandiol-1,4
30,1 Gew.-% monopropoxyliertes Butandiol
1 Gew.-% dipropoxyliertes Butandiol.

**9.2 Phasenstabilität von Polyol A/Butandioladdukten und Vergleichsversuche**

Jeweils 100 g des Polyols A) werden mit verschiedenen Mengen aun Diolen versetzt und auf Phasenstabilität geprüft.

9.2.1 A / Butandiol-1,4
9.2.2 A / Addukt XIII (salzfrei - nicht erfindungsge-mäß)
9.2.3 A / Addukt XIII <u>plus 1 % K-Acetat</u> (erfindungs-gemäß)

**Tabelle 13:**

Phasenstabilität von Polyol A / Diol-Gemischen (bezogen auf je 100 Teile A)
Beispiele

| Menge Addukt (Tle) | 9.2.1 | 9.2.2 | 9.2.3 |
|---|---|---|---|
| | (nicht erfindungsgemäß) | | (erfindungsgemäß) |
| 5 | + | + | + |
| 10 | + | + | + |
| 15 | – | + | + |
| 20 | – | – | + |
| 25 | – | – | – |
| 30 | | | + |
| 50 | | | + |
| 70 | | | + |
| 100 | | | + |
| 150 | | | + |
| 200 | | | + |
| 500 | | | + |

(+ einphasig lagerstabil)
(- zwei Phasen)

**Beispiel 10**

Zähelastischer, harter PU-Integralschaum
10.1 (erfindungsgemäß)

**Rezeptur:**

Lagerstabile Polyolkomponente:
75 Teile Polyol A
25 Teile Addukt V
2 Teile L 5420 ® (Zellstabilisator der UCC-USA).
0,3 Teile Wasser
1 Teil Dabco 33 LV ® (tert.-Amin-Katalysator der Air Products)

100 Teile dieser Polyolformulierung (berechnete OH-Zahl: 392) werden mit 15 Teilen Trichlormethan und 110 Teilen an Isocyanat A vermischt und auf einer HK 165 der Maschinenfabriken Henneke (St. Augustin) verschäumt (Kennzahl 105).

Isocyanat A besteht aus einer Mischung von 161 Teilen eines Polyisocyanats, das durch Phosgenierung von Anilin-Formaldehyd-Kondensaten und anschließende Umsetzung mit einem Gemisch aus Tri- und Tetrapropylenglykol der OH-Zahl 480 erhalten wurde und eine Viskosität von 130 mPa.s bei 25°C und einen NCO-Gehalt von 28 Gew.-% aufweist.

**Maschinen-Daten**

Rohstofftemperatur (°C) 25
Werkzeugtemperatur (°C) 60
Start-/Abbinde-/Steigzeit (sec) 10/22/35
Rohdichte freigeschäumt (kg/m$^3$) 70

Das Fließverhalten in der Rohdichte 600 ist zufriedenstellend (ebenso in Rohdichten 300 und 150). Testpäckchen und Prüfplatten sind störungsfrei. Mechanische Daten (1 cm dicke Prüfplatten)

Rohdichte (kg/m$^3$) 600
Biegefestigkeit (MPa) 22,4
Biege-E-Modul (MPa) 530
Zugfestigkeit (MPa) 11,5
Reißdehnung (%) 34,5
Schlagzähigkeit (kJ/m$^3$) 55

10.2. Vergleichsversuch

**Rezepteur**

Polyolkomponente (nicht lagerstabil):
80 Teile Polyol A
20 Teile Ethylen lykol
2 Teile L 5420 ®
0,3 Teile Wasser
1 Teil Dabco 33 LV ®

Verarbeitungsrezeptur und Isocyanatkomponente waren identisch wie in 10.1. beschrieben.

**Maschinen-Daten**

Rohstofftemperatur (°C) 25
Werkzeug-Temperatur (°C) 60
Start-/Abbinde-/Steigzeit (sec) 15/30/39
Rohdichte freigeschäumt (kg/m$^3$) 70

Das Fließverhalten in Rohdichte 600 kg/m$^3$ ist zufriedenstellend (ebenso in der Rohdichte 300). Testpäckchen und Prüfplatte sind störungsfrei.

**Mechanische Daten** (1 cm dicke Prüfplatten):

Rohdichte (kg/m$^3$) 600
Biegefestigkeit (MPa) 12,7
Biege-E-Modul (MPa) 300
Zugfestigkeit (MPa) 9,2
Reißdehnung (%) 54,2
Schlagzähigkeit (kJ/m$^2$) Material nicht gebrochen

**Beispiel 11**

Halbharter PU-Integralschaum
11.1. (erfindungsgemäß)

**Rezeptur** (bei 20°C und 50°C phasenstabil)

94 Teile Polyol B
6 Teile Addukt V
0,2 Teile Wasser
1 Teil Dabco 33 LV®
101 Teile dieser Polyolformulierung werden mit 15 Teilen Trichlorfluormethan und 36 Teilen Isocyanat A vermischt und auf einer HK 165 der Maschinenfabriken Hennecke (St. Augustin) verschäumt (Kennzahl 105).
11.2. (nicht erfindungsgemäß)

**Rezeptur** (nicht lagerstabil):

94 Teile Polyol B
4,85 Teile Ethylenglykol
0,2 Teile Wasser
1 Teil Dabco 33 LV®
100 Teile dieser Polyolformulierung werden mit 15 Teilen Trichlorfluormethan und 36 Teilen Isocyanat A vermischt und auf einer HK 165 der Maschinenfabriken Henneke (St. Augustin) verschäumt (Kennzahl 105)

**Mechanische Daten** (1 cm dicke Platten)

| | 11.1. | 11.2. |
|---|---|---|
| Rohdichte | 319 | 314 |
| Stauchversuch<br>40 % Stauchung (kPa) | 113 | 110 |
| Druckverformungsrest<br>50 % (%) | 6 | 5 |
| Zugversuch<br>Reißspannung (kPa) | 390 | 360 |
| Reißdehnung (%) | 88 | 70 |
| Weiterreißfestigkeit<br>(kN/m) | 1,19 | 1,13 |

**Patentansprüche**

1. Einphasig lagerstabiles, emulgatorfreies Polyolgemisch mit hoher Misch-OH-Zahl und hohem Gehalt an freiem Ethylenglykol und/oder Butandiol-1,4, aus
A) einem höhermolekularen Polyoxyalkylenpolyol und
B) einem Gemisch niedermolekularer Diole, gegebenenfalls
C) weiteren, an sich bekannten Verbindungen mit gegenüber Isocyanaten reaktionsfähigen

Wasserstoffatomen,
D) lösungsvermittelnden Zusätzen und gegebenenfalls
E) weiteren Hilfs- und Zusatzstoffen der Polyurethanherstellung,
dadurch gekennzeichnet, daß man
als Komponente A) ein Polyoxyalkylenpolyol der OH-Zahl 20-120, das mindestens 5 Gew.-% und weniger als 80 Gew.-%, überwiegend oder ausschließlich endständige Oxyethylenblöcke, besitzt,
als Komponente B) ein niedermolekulares Diolgemisch in Form der Umsetzungsprodukte von
1. Ethylenglykol und/oder Butandiol-1,4, mit
2. 0,05 bis 0,50 Mol Alkyloxiranen

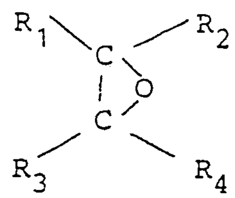

$R_1 = CH_3, CH_2.Cl, C_2H_5$
$R_2 = H, CH_3$
$R_3, R_4 = H, CH_3, C_2H_5$,
gegebenenfalls als Komponente C) weitere zweioder mehrwertige Verbindungen mit gegenüber NCO-Gruppen reaktionsfähigen Wasserstoffatomen und einer Molmasse von 32 bis 399,
und als lösungsvermittelnde Zusätze D) ein oder mehrere Salze mit Kationen der 1., 2. und 3. Hauptgruppe des Periodensystems der Elemente oder Ammonium- oder Mono- bis Tetra-alkylammonium-Ionen und als Anionen Reste enthalten, wie sie durch Entfernung mindestens eines Protons aus einer Säure mit einem $K_S$-Wert von mindestens 10 entstehen, wobei im Polyolgemisch auf 100 Teile A) 1 bis 100 B), gegebenenfalls 0 bis 20 Teile C) und erfindungswesentlich 0,01 bis 5 Teile D) eingesetzt werden.

2. Polyolgemisch nach Anspruch 1, dadurch gekennzeichnet, daß man als Komponente A) Polyoxyalkylenpolyole verwendet, die 10 bis 50 Gew.-%, überwiegend oder ausschließlich endständige Ethylenoxidblöcke besitzen.

3. Polyolgemisch nach Ansprüchen 1 und 2, dadurch gekennzeichnet, daß,am als Komponente A) Polyoxypropylenpolyole mit 12,5 bis 27,5 Gew.-%, überwiegend oder ausschließlich endständigen, Ethylenoxidblöcken verwendet.

4. Polyolgemisch nach Ansprüchen 1 bis 3, dadurch gekennzeichnet, daß man als Komponente A) 2- bis 4-wertige Polyalkylenoxidpolyole mit einer OH-Zahl von 20 bis 60 verwendet.

5. Polyolgemische nach Ansprüchen 1 bis 4, dadurch gekennzeichnet, daß die Komponente B) aus
a) mindestens 40 Gew.-% Ethylenglykol und/oder Butandiol-1,4 als B)/I,
b) 20 bis 50 Gew:-% Monoalkoxylierungsprodukt von B)/1,
c) 0 bis 20 Gew.-% Dialkoxylierungsprodukt von B)/1,
d) 0 bis 10 Gew.-% Trialkoxylierungsprodukt von B)/1 und
e) 0 bis 2 Gew.-% noch höher alkoxylierten Produkten von B)/1, wobei die Summe von a) bis e) = 100 Gew.-% ist, besteht.

6. Polyolgemisch nach Ansprüchen 1 bis 5, dadurch gekennzeichnet, daß als Komponente b) ein Umsetzungsprodukt aus 1 Mol Ethylenglykol und/oder Butandiol-1,4 und 0,05 bis 0,5 Mol Propylenoxid verwendet wird.

7. Polyolgemisch nach Ansprüchen 1 bis 6, dadurch gekennzeichnet, daß man als Komponente B) ein Umsetzungsprodukt von Ethylenglykol und 0,2 bis 0,4 Mol Propylenoxid verwendet.

8. Polyolgemisch nach Ansprüchen 1 bis 7, dadurch gekennzeichnet, daß man als lösungsvermittelnde Zusätze D) 0,01 bis 5 Teile von Alkalimetall-, Erdalkalimetalloder Tetraalkylammoniumsalzen von $C_1$-$C_8$-Carbonsäuren, Halogenwasserstoffsäuren, Pseudohalogenwasserstoffsäuren, Schwefelsäure, Salpetersäure und Phosphorsäure verwendet.

9. Polyolgemisch nach Ansprüchen 1-8, dadurch gekennzeichnet, daß man Natrium- und 0,1 bis 2,5 Teile der Kaliumsalze von $C_1$ bis $C_8$-Carbonsäuren, Halogenwassserstoffsäuren und Pseudohalogenwasserstoffsäuren verwendet.

10. Verwendung der einphasig lagerstabilen, emulgatorfreien, salzhaltigen Polyolgemische nach Ansprüchen 1 bis 9 als Reaktionskomponente bei der Herstellung von Polyurethankunststoffen.

## Claims

1. Emulsifier-free polyol mixture which remains stable, in a single phase, under storage and which has a high mixture OH number and a high content of free ethylene glycol and/or 1 4-butanediol consisting of

A) a higher molecular weight polyoxyalkylene polyol and

B) a mixture of low molecular weight diols, optionally

C) other compounds known per se which have hydrogen atoms which are reactive towards isocyanates,

D) solubilising additives and optionally

E) other auxiliaries and additives for polyurethane production, characterised in that

a polyoxyalkylene polyol of an OH number of 20-120, which has at least 5% by weight and less than 80% by weight of predominantly or exclusively terminal oxyethylene blocks, is used as component A), a low molecular weight diol-mixture in the form of the reaction products of

1. ethylene glycol and/or 1,4-butanediol with
2. 0.05 to 0.50 mols of alkyl oxiranes

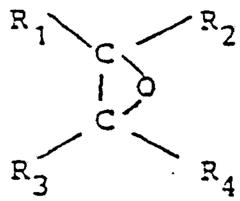

$R_1$ = $CH_3$, $CH_2.Cl$, $C_2H_5$,
$R_2$ = H, $CH_3$,
$R_3$, $R_4$ = H, $CH_3$, $C_2H_5$,
is used as component B),

optionally other di- or higher- functional compounds having hydrogen atoms which are resctive towards NCO groups and having a molecular weight of 32 to 399 are used as component C),

and one or more salts having cations of the 1st, 2nd and 3rd main groups of the periodic system of the elements or ammonium or mono- to tetra-alkylammonium ions and containing as anions radicals such as are formed by the removal of at least one proton from an acid having a $K_s$ value of at least $10^{-7}$, are used as the solubilising additives D), 1 to 100 of B), optionally 0 to 20 parts of C) and, as an essential part of the invention, 0.01 to 5 parts of D) being used in the polyol mixture per 100 parts of A).

2. Polyol mixture according to Claim 1, characterised in that polyoxyalkylene polyols which have 10 to 50% by weight of predominantly or exclusively terminal ethylene oxide blocks are used as component A).

3. Polyol mixture according to Claims 1 and 2, charscterised in that polyoxypropylene polyols having 12.5 to 27.5% by weight of predominantly or exclusively terminal ethylene oxide blocks are used as component A).

4. Polyol mixture according to Claims 1 to 3, characterised in that 2- to 4-functional polyalkylene oxide polyols having an OH number of 20 to 60 are used as component A).

5. Polyol mixtures according to Claims 1 to 4, characterised in that component B) consists of

a) at least 40% by weight of ethylene glycol and/or 1,4-butanediol as B)/1,

b) 20 to 50% by weight of a monoalkoxylation product of B)/1,

c) 0 to 20% by weight of a dialkoxylstion product of B)/1,

d) 0 to 10% by weight of a trialkoxylstion product of B)/1 and

e) 0 to 2% by weight of still higher alkoxylated products of B)/1, the sum of a) to e) being 100% by weight.

6. Polyol mixture according to Claims 1 to 5, characterised in that a reaction product of 1 mol of ethylene glycol and/or 1,4-butanediol and 0.05 to 0.5 mol of propylene oxide is used as component b).

7. Polyol mixture according to Claims 1 to 6, characterised in that a reaction product of ethylene glycol and 0.2 to 0.4 mol of propylene oxide is used as component B).

8. Polyol mixture according to Claims 1 to 7, characterised in that 0.01 to 5 parts of alkali metal, alkaline earth metal or tetraalkylammonium salts of $C_1$-$C_8$-carboxylic acids, hydrohalic acids, pseudo-hydrohalic acids, sulphuric acid, nitric acid and phosphoric acid are used as the solubilising additives D).

9. Polyol mixture according to Claims 1-8, characterised in that sodium salts and 0.1 to 2.5 parts of the potassium salts of $C_1$ to $C_8$ carboxylic acids, hydrohalic acids and pseudo-hydrohalic acids are used.

10. Use of the emulsifier-free, salt-containing polyol mixtures which remain stable, in a single phase, under storage, according to Claims 1 to 9, as a reaction component in the production of polyurethane plastics.

**Revendications**

1. Mélange de polyols exempt d'émulsifiants, monophasé, stable à l'entreposage, ayant un indice OH mixte élevé et une teneur élevée en éthylène glycol et/ou en butane diol-1,4 libre, au départ

A) d'un polyoxyalcoylene polyol à poids moléculaire élevé et

B) d'un mélange de diols à poids moleculaire inferieur, éventuellement

C) d'autres composés connus en eux-mêmes avec atomes d'hydrogène réactifs envers les isocyanates,

D) d'additifs promoteurs de dissolution et eventuellement

E) d'autres auxiliaires et additifs pour la fabrication de polyuréthanes,

caractérisé en ce qu'on utilise

comme composant A) un polyoxyalcoylene polyol d'indice OH 20-120, qui possède au moins 5% en poids et moins de 80% en poids de blocs oxyéthylene qui sont terminaux de manière prépondérante ou exclusive,

comme composant B) un mélange de diols à poids moleculaire inférieur sous forme de produits de réaction

1. d'éthylène glycol et/ou de butane diol-1,4, avec

2. 0,05 à 0,50 mole d'alcoyloxiranes

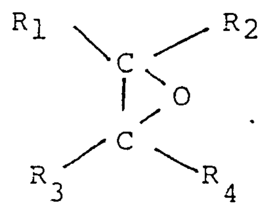

$R_1$ = CH3, $CH_2.C1$, $C_2H_5$

$R_2$ = H, $CH_3$

$R_3$, $R_4$ = H, $CH_3$, $C_2H_5$

éventuellement comme composant C) d'autres composés bi- ou polyvalents avec atomes d'hydrogène réactifs envers les groupes NCO et ayant une masse molaire de 32 à 399,

et comme additifs promoteurs de dissolution D) un ou plusieurs sels avec cations du ler, 2e et 3e groupe principal du système periodique des éléments ou ions ammonium ou mono- à tétra-alcoylamonium, et qui comme anions contiennent des radicaux comme ceux que l'on obtient par élimination d'au moins un proton à partir d'un acide ayant une valeur $K_S$ d'au moins $10^{-7}$, dans le mélange de polyols étant employes pour 100 parties de A) 1 à 100 de B), éventuellement 0 à 20 parties de C) et, de manière essentielle selon l'invention, 0,01 à 5 parties de D).

2. Mélange de polyols selon la revendication 1, caractérisé en ce qu'on utilise comme composant A) des polyoxyalcoylène polyols qui possèdent 10 à 50% en poids de blocs oxyde d'éthylène principalement ou exclusivement terminaux.

3. Mélange de polyols selon les revendications 1 et 2, caractérisé en ce qu'on utilise comme composant A) des polyoxypropylènepolyols avec 12,5 à 27,5% en poids de blocs oxyde d'éthylène principalement ou exclusivement terminaux.

4. Mélange de polyols selon les revendications 1 à 3, caractérisé en ce qu'on utilise comme composant A) des polyoxydes d'alcoylènepolyols bi- à tetravalents ayant un indice OH de 20 à 60.

5. Mélanges de polyols selon les revendications 1 à 4, caractérisés en ce que le composant B) consiste en

a) au moins 40% en poids d'éthylène glycol et/ou de butane diol-1,4 en tant que B)/I,

b) 20 à 50% en poids de produit de monoalcoxylation de B)/I,

c) 0 à 20% en poids de produit de dialcoxylation de B)/I,

d) 0 à 10% en poids de produit de trialcoxylation de B)/I et en

e) 0 à 2% en poids de produits encore plus fortement alcoxylés, la somme de a) à e) étant égale à 100% en poids.

6. Mélange de polyols selon les revendications 1 à 5, caractérisé en ce qu'on utilise comme composant b) un produit de réaction de 1 mole d'éthylène glycol et/ou de butane diol-1,4 et 0,05 à 0,5 mole d'oxyde de propylène.

7. Mélange de polyols selon les revendications 1 à 6, caractérisé en ce qu'on utilise comme composant B) un produit de réaction d'éthylène glycol et de 0,2 à 0,4 mole d'oxyde de propylène.

8. Mélange de polyols selon les revendications 1 à 7, caractérisé en ce qu'on utilise comme additifs promoteurs de dissolution D) 0,01 à 5 parties de sels de métaux alcalins, de métaux alcalino-terreux ou de tétralcoyl-ammonium d'acides carboxyliques en $C_1$-$C_8$, d'hydracides halogénés, de pseudohydracides halogénés, d'acide sulfurique, d'acide nitrique et d'acide phosphorique.

9. Mélange de polyols selon les revendications 1 à 8, caractérisé en ce qu'on utilise des sels de sodium et 0,1 à 2,5 parties de sels de potassium d'acides carboxyliques en $C_1$ à $C_8$, d'hydracides halogénés et de

pseudohydracides halogénés.

10. Utilisation des mélanges de polyols monophasés stables à l'entreposage, exempts d'émulsifiants et contenant des sels selon les revendications 1 à 9 en tant que composant réactionnel dans la fabrication des matières synthétiques en polyuréthanes.